# EUROPEAN PATENT SPECIFICATION

(11) **EP 3 828 624 B1**
(45) Date of publication and mention of the grant of the patent: **26.11.2025**
(21) Application number: 18933115.0
(22) Date of filing: 12.09.2018
(51) Int. Cl.: G02F 1/1333, G02F 1/1335, H04M 1/03, H04M 1/02

(54) **LIQUID CRYSTAL DISPLAY PANEL**
FLÜSSIGKRISTALLANZEIGETAFEL
PANNEAU D'AFFICHAGE À CRISTAUX LIQUIDES

(43) Date of publication of application: 02.06.2021
(73) Proprietor: HUAWEI TECHNOLOGIES CO., LTD., Shenzhen, Guangdong 518129 (CN)
(72) Inventor: MA, Lei, Shenzhen, Guangdong 518129 (CN); WANG, Peng, Shenzhen, Guangdong 518129 (CN); XIAO, Guangnan, Shenzhen, Guangdong 518129 (CN); ZHANG, Feng, Shenzhen, Guangdong 518129 (CN); CHEJUI, Hsu, Shenzhen, Guangdong 518129 (CN)
(74) Representative: Pfenning, Meinig & Partner mbB
(86) International application number: PCT/CN2018/105297
(87) International publication number: WO 2020/051809

(56) References cited:
- CN-A- 106 526 942
- CN-A- 106 773 229
- CN-A- 107 272 242
- CN-A- 107 402 473
- CN-A- 107 817 629
- CN-U- 206 209 240
- US-A1- 2007 077 502
- US-A1- 2013 258 234

## Description

### TECHNICAL FIELD

This application relates to the field of display device technologies, and in particular, to a liquid crystal display panel, a liquid crystal display, and an electronic device.

### BACKGROUND

In a conventional mobile phone, devices such as a camera module and an ambient light sensor need to be placed around a mobile phone screen. As a result, an arrangement space of the mobile phone screen is limited, and a screen-to-body ratio of the mobile phone is comparatively low.
US 2013/258234 A1 discusses a display apparatus. The display apparatus includes a display unit and a guide frame. The display unit has a panel provided with lower and upper substrates sealed with having liquid crystal filled therebetween. The guide frame supports the display unit. The guide frame includes a guide sidewall and a panel supporter. The guide side wall guides a lateral side of the panel. The panel supporter supports the panel.

### SUMMARY

Embodiments of this application provide a liquid crystal display panel, a liquid crystal display, and an electronic device that can increase a screen-to-body ratio. The invention is set out in the appended set of claims. All embodiments and/or aspects not falling under the scope of the appended claims are to be considered merely as examples suitable for understanding the invention.

According to a first aspect, an embodiment of this application provides a liquid crystal display panel. The liquid crystal display panel has a light transmission region, a light shielding region surrounding the light transmission region, and a display region surrounding the light shielding region. The light shielding region is located between the light transmission region and the display region. The light transmission region allows visible light to pass. The light shielding region can shield visible light. The display region is configured to display an image.

The liquid crystal display panel includes a first substrate, a first film group, a first alignment layer, a liquid crystal layer, a second alignment layer, a second film group, and a second substrate that are successively disposed in a laminated manner. The first film group includes a plurality of film layers. The first film group is formed on the first substrate. The first alignment layer is formed on the first film group. The second film group includes one or more film layers. The second film group is formed on the second substrate. The second alignment layer is at least partially formed on the second film group.

Both the first substrate and the second substrate are made of a transparent material, and continuously cover the light transmission region, the light shielding region, and the display region. The first substrate and the second substrate may be made of a glass material. The first substrate and the second substrate each are a plate with a continuous surface, and have sufficient structural strength, so that overall strength of the liquid crystal display panel is comparatively high, and the liquid crystal display panel does not easily break.

The first alignment layer (alignment layer, also referred to as an orientation layer), the liquid crystal layer (liquid crystal layer), and the second alignment layer are all located in the light transmission region, the light shielding region, and the display region. Both the first alignment layer and the second alignment layer are made of a transparent material. The first alignment layer and the second alignment layer are separately located on two opposite sides of the liquid crystal layer, and are in direct contact with the liquid crystal layer. The liquid crystal layer is sandwiched between the first alignment layer and the second alignment layer. The first alignment layer and the second alignment layer are configured to provide a pre-tilt angle for a liquid crystal in the liquid crystal layer.

The first film group includes a first display part located in the display region, a first transition part located in the light shielding region, and a first light transmission part located in the light transmission region. The first transition part surrounds the first light transmission part. The first display part surrounds the first transition part. The first transition part connects the first light transmission part to the first display part. The second film group includes a second display part located in the display region, a second transition part located in the light shielding region, and a second light transmission part located in the light transmission region. The second transition part surrounds the second light transmission part. The second display part surrounds the second transition part. The second transition part connects the second light transmission part to the second display part.

The first display part and the second display part cooperate with each other to display an image. The first display part and the second display part are important components for displaying an image on the liquid crystal display panel, but are not all components. The first display part and the second display part cooperate with each other to jointly participate in and affect a display action of the liquid crystal display panel. When the liquid crystal display panel performs displaying, cooperation of another structure is further required, for example, the liquid crystal layer, and a first polarizer and a second polarizer in the following descriptions. Both the first light transmission part and the second light transmission part allow visible light to pass. At least one of the first transition part and the second transition part can shield visible light. To be specific, the first transition part can shield visible light, the second transition part can shield visible light, or both the first transition part and the second transition part can shield visible light.

In this embodiment, both the first substrate and the second substrate are made of a transparent material, the first alignment layer and the second alignment layer are made of a transparent material, the first light transmission part that is of the first film group and that is located in the light transmission region allows visible light to pass, and the second light transmission part that is of the second film group and that is located in the light transmission region allows visible light to pass. Therefore, the light transmission region allows visible light to pass. When the liquid crystal display panel is applied to an electronic device, an optical device such as a camera module in the electronic device can be placed below the light transmission region of the liquid crystal display panel, to transmit visible light through the light transmission region, and alleviate a limitation imposed by the optical device on an arrangement space of the liquid crystal display panel. In addition, the light transmission region is surrounded by the display region, so that a larger display region can be provided on the liquid crystal display panel, to reduce a frame area of the electronic device, increase a display area of the electronic device, and increase a screen-to-body ratio of the electronic device.

In accordance with the claimed invention, in a direction from the first substrate to the second substrate (that is, a thickness direction of the liquid crystal display panel), a thickness of the first display part is greater than that of the first light transmission part, and the first transition part forms a step structure that connects the first display part to the first light transmission part. A top surface that is of the first transition part and that is away from the first substrate includes one or more stepped surfaces.

In a conventional liquid crystal display panel, when there is a comparatively large difference between thicknesses of different parts of a film layer configured to bear an alignment layer, the alignment layer is likely to accumulate in a transition region between a thinner part and a thicker part, thereby causing a problem such as display mura (mura) or heterochromatic display on the liquid crystal display panel. For example, the alignment layer is likely to accumulate in an edge region that is of a thinner part and that is adjacent to a thicker part, thereby causing yellowing or blanching of the edge region.

In this embodiment, the step structure formed by the first transition part of the liquid crystal display panel enables a gradual transition of a height difference between the first display part and the first light transmission part, and the one or more stepped surfaces of the first transition part can bear the first alignment layer, thereby reducing a risk that the first alignment layer accumulates at an edge of a top surface (a surface away from the first substrate) of the first light transmission part, and effectively resolving a problem such as display mura or heterochromatic display in the light transmission region of the liquid crystal display panel due to accumulation of the alignment layer, so that the liquid crystal display panel has comparatively high display quality.

The risk that the first alignment layer accumulates at the edge of the top surface of the first light transmission part is comparatively low, and the first alignment layer can be comparatively evenly applied on the top surface of the first light transmission part. Therefore, a risk that light passing through the light transmission region generates noise due to a foreign object is comparatively low, thereby ensuring operating quality of the optical device.

The step structure also helps improve a liquid crystal arrangement in the liquid crystal layer, so that the liquid crystal arrangement is more even, and the liquid crystal display panel has higher display quality.

The thickness of the first light transmission part is less than that of the first display part, that is, the first light transmission part is thinner. This helps increase a transmittance of the light transmission region.

In this application, because the liquid crystal display panel has comparatively high strength, a shape and a size of the light transmission region, a quantity of light transmission regions, and a spacing between the light transmission region and an edge of the liquid crystal display panel are designed more flexibly and diversely. This helps improve overall reliability of the electronic device. For example, the shape of the light transmission region may be a circle, an ellipse, a polygon, a rounded rectangle, or a runway (including two straight sides that are parallel to each other and arc sides that are oppositely connected between the two straight sides). There may be one or more light transmission regions. A plurality of light transmission regions may separately provide light transmission channels for a plurality of optical devices. An arrangement manner of the plurality of light transmission regions may be flexibly designed, for example, an array arrangement or an annular arrangement.

The one or more stepped surfaces are roughly parallel to the first substrate. In this case, the one or more stepped surfaces are easy to process, and can better bear the first alignment layer.

In an optional embodiment, a quantity of film layers of the first light transmission part is a first value, and a quantity of film layers of the first display part is a second value. The first value is less than the second value. A quantity of film layers of the first transition part is within a range from the first value to the second value. The range from the first value to the second value is a range including the first value and the second value that act as a minimum value and a maximum value respectively.

In this embodiment, different film layers in the first film group may be arranged differently in the light transmission region, the light shielding region, and the display region, so that the quantity of film layers of the first light transmission part is different from that of the first display part, and the quantity of film layers of the first transition part may be within the range from the first value to the second value. For example, some film layers in the first film group may cover all of the light transmission region, the light shielding region, and the display region, some film layers in the first film group may cover both the display region and the light shielding region, and some film layers in the first film group may cover only the display region. The first film group can adjust thicknesses of the first light transmission part, the first transition part, and the first display part by controlling quantities of film layers of the first light transmission part, the first transition part, and the first display part.

The second value is greater, that is, the quantity of film layers of the first display part is greater. Therefore, the first display part can form a comparatively complex layer structure, to adapt to the display region of the liquid crystal display panel. The first value is smaller, that is, the quantity of film layers of the first light transmission part is smaller. Therefore, a transmittance of the first light transmission part is higher, and operating quality of the optical device is higher.

In an optional embodiment, in the first transition part, the one or more stepped surfaces are formed on a top surface that is away from a top film layer of the first substrate. When there are a plurality of stepped surfaces, the plurality of stepped surfaces are formed at one film layer.

Alternatively, in the first transition part, the stepped surface is formed at an end that is of one or more film layers and that faces the first light transmission part. When there are a plurality of stepped surfaces, the plurality of stepped surfaces are formed at different film layers.

In accordance with the claimed invention, the top surface of the first transition part further includes a plurality of joint surfaces that are spaced from each other. The stepped surface is connected between two adjacent joint surfaces. An included angle of 120° to 135° is formed between the stepped surface and the joint surface that are connected. The joint surface may tilt relative to the first substrate. In this case, difficulty in forming each film layer in the first transition part is comparatively low. This helps increase a product yield rate of the liquid crystal display panel. In addition, this can avoid a problem that the stepped surface has a comparatively small area and cannot effectively bear the first alignment layer because an oblique angle between the stepped surface and the joint surface is excessively large.

In an embodiment outside of the claimed invention, the stepped surface is roughly perpendicular to the joint surface. In this case, the top surface of the first transition part can include a stepped surface with a larger area, to improve an effect of bearing the first alignment layer, and reduce a risk that the first alignment layer accumulates on the light transmission region (to be specific, the first light transmission part).

In an optional embodiment, the top surface of the first transition part further includes a transition surface. The transition surface is connected between the joint surface and the top surface that is of the first light transmission part and that is away from the first substrate. The joint surface is a joint surface closest to the first light transmission part among the plurality of joint surfaces. The transition surface is flush with the top surface of the first light transmission part. A smooth transition is achieved between the transition surface and the top surface of the first light transmission part.

In this embodiment, the first transition part is provided with the transition surface that is flush with the top surface of the first light transmission part, and the transition surface is connected closer to the joint surface than the top surface of the first light transmission part. Therefore, even if the first alignment layer slightly accumulates, the first alignment layer accumulates on the transition surface, and a part that is of the first alignment layer and that is located on the top surface of the first light transmission part is applied evenly, without or almost without accumulation. This can effectively resolve a problem such as display mura (mura) or heterochromatic display caused by accumulation of the alignment layer.

In an optional embodiment, the top surface of the first transition part further includes a second transition surface. The second transition surface is connected between the top surface of the first display part and the joint surface. The second transition surface is smoothly connected to the top surface of the first display part.

In this embodiment, because the second transition surface is smoothly connected to the top surface of the first display part, the first alignment layer can be evenly applied on a transition region between the first transition part and the first display part, to ensure display quality of the liquid crystal display panel.

In an optional embodiment, the first film group includes a device array layer. The device array layer includes a plurality of light transmission film layers and a plurality of light shielding film layers that are disposed in a laminated manner. The plurality of light transmission film layers allow visible light to pass. One or more of the plurality of light transmission film layers are patterned film layers. The plurality of light shielding film layers can shield visible light. The plurality of light shielding film layers are patterned film layers.

The first display part includes parts that are of the plurality of light shielding film layers and that are located in the display region, and parts that are of the plurality of light transmission film layers and that are located in the display region. The device array layer forms a plurality of thin film transistors (thin film transistor, TFT) in the display region. In other words, the parts that are of the plurality of light shielding film layers and that are included in the first display part, and the parts that are of the plurality of light transmission film layers and that are included in the first display part jointly form the plurality of thin film transistors. The plurality of thin film transistors are disposed in an array. The first light transmission part includes a part that is of one or more light transmission film layers and that is located in the light transmission region.

In this embodiment, because the first light transmission part includes the part that is of the one or more light transmission film layers and that is located in the light transmission region, a difference between the thickness of the first light transmission part and the thickness of the first display part is comparatively small, and a thickness of a part that is of the liquid crystal layer and that is in the light transmission region is close to a thickness of a part that is of the liquid crystal layer and that is in the display region, to reduce a risk that a display anomaly (for example, a Newton's ring) occurs in the display region around the light transmission region due to an excessively large difference between layer structures, and improve display quality of the liquid crystal display. In addition, a quantity of stepped surfaces of the first transition part and/or an area of the stepped surface of the first transition part can be reduced, and difficulty in processing the first transition part can be reduced.

A film layer of the first light transmission part and some film layers of the first display part are film layers at a same layer, and can be manufactured in one formation process. Therefore, a formation procedure of the first light transmission part can be integrated in a formation procedure of the first display part, thereby reducing difficulty in processing the device array layer, and improving efficiency of processing the device array layer.

The thin film transistors in the device array layer may be of a top gate structure. An example is as follows:
The device array layer includes a shield layer, a buffer layer, a semiconductor layer, a gate insulator layer (gate insulator layer), a gate, a first insulator layer, a source, a drain, a second insulator layer, a common electrode, a third insulator layer, and a pixel electrode. The shield layer is formed on the first substrate. The buffer layer is formed on the first substrate and covers the shield layer. The semiconductor layer is located on a side that is of the buffer layer and that is away from the first substrate, and directly faces the shield layer. The semiconductor layer may be made of a low temperature poly-silicon (low temperature poly-silicon, LTPS) material. The semiconductor layer includes a channel region, two lightly doped regions, and two heavily doped regions. The two lightly doped regions are separately connected to two opposite ends of the channel region. The two heavily doped regions are separately connected to two ends that are of the two lightly doped regions and that are away from the channel region. The gate insulator layer is located on a side that is of the buffer layer and that is away from the first substrate, and covers the semiconductor layer. The gate insulator layer is provided with a first hole and a second hole that directly face the two heavily doped regions separately. The gate is located on a side that is of the gate insulator layer and that is away from the buffer layer, and is disposed by directly facing the channel region. The first insulator layer is located on a side that is of the gate insulator layer and that is away from the buffer layer, and covers the gate. The first insulator layer is provided with a third hole connected to the first hole and a fourth hole connected to the second hole. The source and the drain are located on a side that is of the first insulator layer and that is away from the gate insulator layer. The source is connected to one of the heavily doped regions through the third hole and the first hole. The drain is connected to the other heavily doped region through the fourth hole and the second hole. The second insulator layer is located on a side that is of the first insulator layer and that is away from the gate insulator layer, and covers the source and the drain. The second insulator layer is provided with a fifth hole that directly faces the drain (or the source). The common electrode is located on a side that is of the second insulator layer and that is away from the first insulator layer. The third insulator layer is located on a side that is of the second insulator layer and that is away from the first insulator layer, and covers the common electrode. The third insulator layer is provided with a sixth hole connected to the fifth hole. The pixel electrode is located on a side that is of the third insulator layer and that is away from the second insulator layer, and is connected to the drain (or the source) through the sixth hole and the fifth hole.

In this case, the plurality of light shielding film layers may include the shield layer, the semiconductor layer, the gate, the source, the drain, and the like. The plurality of light transmission film layers may include the buffer layer, the gate insulator layer, the first insulator layer, the second insulator layer, and the third insulator layer. When the pixel electrode and the common electrode are made of a transparent material, the pixel electrode and the common electrode may also belong to the plurality of light transmission film layers.

Alternatively, the thin film transistors in the device array layer may be of a bottom gate structure. An example is as follows:
The device array layer includes a gate, a gate insulator layer, a semiconductor layer, a source, a drain, an insulator layer, and a pixel electrode. The gate is formed on the first substrate. The gate insulator layer is formed on the first substrate and covers the gate. The semiconductor layer is located on a side that is of the gate insulator layer and that is away from the gate, and directly faces the gate. The semiconductor layer may be made of an amorphous silicon (amorphous silicon, α-Si) material. The source is located on a side that is of the gate insulator layer and that is away from the first substrate, and is connected to an end of the semiconductor layer. The drain is located on a side that is of the gate insulator layer and that is away from the first substrate, and is connected to the other end of the semiconductor layer. The insulator layer is located on a side that is of the gate insulator layer and that is away from the first substrate, and covers the source, the semiconductor layer, and the drain. The insulator layer is provided with a via that directly faces the drain (or the source). The pixel electrode is located on a side that is of the insulator layer and that is away from the gate insulator layer, and is connected to the drain (or the source) through the via.

In this case, the plurality of light shielding film layers may include the gate, the semiconductor layer, the source, and the drain. The plurality of light transmission film layers may include the gate insulator layer and the insulator layer. When the pixel electrode is made of a transparent material, the pixel electrode may also belong to the plurality of light transmission film layers.

In another embodiment, a layer structure of the device array layer may be different from that in the foregoing two embodiments, in other words, the device array layer may be of another layer structure. The plurality of light transmission film layers and the plurality of light shielding film layers correspondingly include other film layers.

The first transition part includes a part that is of one or more light transmission film layers and that is in the light shielding region. In this case, the first transition part allows visible light to pass. Alternatively, the first transition part includes a part that is of one or more light transmission film layers and that is in the light shielding region, and a part that is of one or more light shielding film layers and that is in the light shielding region. In this case, the first transition part can shield visible light.

In this embodiment, the first transition part may implement the step structure based on a variation of a quantity of film layers at different locations. For example, in a direction from the first display part to the first light transmission part, a quantity of film layers at different locations in the first transition part progressively decreases, so that a thickness progressively decreases, to form the step structure. Alternatively, the first transition part may form the step structure based on a variation of a thickness of a film layer that is of the first transition part and that is away from a top insulator layer of the first substrate.

In an optional embodiment, the second film group includes a color film layer and a flat layer. The color film layer is also referred to as a color filter (color filter, CF) layer, and is configured to allow light within a specific band range to pass. The color film layer is located between the second substrate and the flat layer. The color film layer includes a black matrix (black matrix, BM) and a plurality of color stoppers alternately disposed with the black matrix. In this embodiment, the black matrix is integrated in the color film layer, and the black matrix and the plurality of color stoppers share a part of thickness space of the liquid crystal display panel.

The second display part includes the plurality of color stoppers, a part of the black matrix, and a part of the flat layer that are arranged in the display region. The second light transmission part is a via. In other words, the color film layer and the flat layer are disposed in the light transmission region in a hollow-out manner. The second transition part includes a part of the black matrix and a part of the flat layer that are arranged in the light shielding region. In this case, the second transition part can shield visible light.

In the second transition part, a stepped surface is formed at an end that is of the black matrix and that is close to the second light transmission part, so that the second transition part forms a step structure. A spacing between the second light transmission part and an end that is of the flat layer and that is close to the second light transmission part is less than a spacing between the second light transmission part and the end that is of the black matrix and that is close to the second light transmission part, so that a part of a surface at the end that is of the black matrix and that is close to the second light transmission part is exposed, to form the stepped surface.

In this embodiment, the second light transmission part is a via, and a part that is of the second alignment layer and that is located in the light transmission region is formed on the second substrate. Therefore, a transmittance of the light transmission region is higher. The second transition part forms the step structure, the step structure can enable a transition of a height difference between the second substrate and the second display part, and the stepped surface of the second transition part can bear the second alignment layer, thereby reducing a risk that the second alignment layer accumulates at an edge of a part that is of the second substrate and that is located in the light transmission region, and effectively resolving a problem such as display mura or heterochromatic display in the light transmission region of the liquid crystal display panel due to accumulation of the alignment layer, so that the liquid crystal display panel has comparatively high display quality.

The first display part can be configured to control a deflection direction of a liquid crystal that is of the liquid crystal layer and that is located in the display region, and the second display part can filter light. Therefore, when the first display part, the liquid crystal layer, and the second display part cooperate with each other, the display region can implement display.

The device array layer is manufactured on the first substrate, and the first film group and the first substrate jointly form an array substrate. The color film layer is manufactured on the second substrate, and the second film group and the second substrate jointly form a color film substrate. During manufacturing of the liquid crystal display panel, the array substrate and the color film substrate are first formed separately, then the array substrate and the color film substrate are meshed together, and then a liquid crystal is filled between the array substrate and the color film substrate to form the liquid crystal layer.

When the thin film transistors in the device array layer are of the foregoing bottom gate structure, the first film group may further include a common electrode layer. The common electrode layer is made of a transparent conducting material.

In an optional embodiment, the second film group includes a color film layer and a flat layer. The color film layer is located between the second substrate and the flat layer. The color film layer includes a black matrix and a plurality of color stoppers alternately disposed with the black matrix. In this embodiment, the black matrix is integrated in the color film layer, and the black matrix and the plurality of color stoppers share a part of thickness space of the liquid crystal display panel.

The second display part includes the plurality of color stoppers, a part of the black matrix, and a part of the flat layer that are arranged in the display region. The second transition part includes a part of the black matrix and a part of the flat layer that are arranged in the light shielding region. The second light transmission part includes a part that is of the flat layer and that is arranged in the light transmission region. In other words, the flat layer continuously covers the display region, the light shielding region, and the light transmission region.

In this embodiment, because the second light transmission part includes a part of the flat layer, a height difference between the second light transmission part and the second display part is comparatively small, or thicknesses of the second light transmission part and the second display part can be even the same, so that a risk that the second alignment layer accumulates on the second light transmission part is comparatively low.

A thickness of the part that is of the flat layer and that is located in the light transmission region may be roughly the same as a thickness of a part that is of the flat layer and that is located in the display region. In this case, the height difference between the second light transmission part and the second display part is comparatively small.

A surface that is of the flat layer and that is away from the second substrate is a flat surface. In this case, thicknesses of the second light transmission part, the second transition part, and the second display part are the same, and the flat layer can provide a flat formation surface. Therefore, the second alignment layer can form a flat film layer, and the second alignment layer does not accumulate on the second light transmission part, so that formation quality of the second alignment layer is higher.

The first display part can be configured to control a deflection direction of a liquid crystal that is of the liquid crystal layer and that is located in the display region, and the second display part can filter light. Therefore, when the first display part, the liquid crystal layer, and the second display part cooperate with each other, the display region can implement display.

The device array layer is manufactured on the first substrate, and the first film group and the first substrate jointly form an array substrate. The color film layer is manufactured on the second substrate, and the second film group and the second substrate jointly form a color film substrate. During manufacturing of the liquid crystal display panel, the array substrate and the color film substrate are first formed separately, then the array substrate and the color film substrate are meshed together, and then a liquid crystal is filled between the array substrate and the color film substrate to form the liquid crystal layer.

When the thin film transistors in the device array layer are of the foregoing bottom gate structure, the first film group may further include a common electrode layer. The common electrode layer is made of a transparent conducting material.

In an optional embodiment, the second film group includes a color film layer. The color film layer is configured to allow light within a specific band range to pass. The color film layer includes a black matrix and a plurality of color stoppers alternately disposed with the black matrix. In this embodiment, the black matrix is integrated in the color film layer, and the black matrix and the plurality of color stoppers share a part of thickness space of the liquid crystal display panel.

The second display part includes the plurality of color stoppers and a part of the black matrix that are arranged in the display region. The second transition part includes a part that is of the black matrix and that is arranged in the light shielding region. In this case, the second transition part can shield visible light. The second light transmission part is a via. In other words, the color film layer is disposed in the light transmission region in a hollow-out manner.

In this embodiment, the second light transmission part is a via, and a part that is of the second alignment layer and that is located in the light transmission region is formed on the second substrate. Therefore, a transmittance of the light transmission region is higher.

The first display part can be configured to control a deflection direction of a liquid crystal that is of the liquid crystal layer and that is located in the display region, and the second display part can filter light. Therefore, when the first display part, the liquid crystal layer, and the second display part cooperate with each other, the display region can implement display.

The device array layer is manufactured on the first substrate, and the first film group and the first substrate jointly form an array substrate. The color film layer is manufactured on the second substrate, and the second film group and the second substrate jointly form a color film substrate. During manufacturing of the liquid crystal display panel, the array substrate and the color film substrate are first formed separately, then the array substrate and the color film substrate are meshed together, and then a liquid crystal is filled between the array substrate and the color film substrate to form the liquid crystal layer.

When the thin film transistors in the device array layer are of the foregoing bottom gate structure, the first film group may further include a common electrode layer. The common electrode layer is made of a transparent conducting material.

In an optional embodiment, the first film group includes a color film layer and a device array layer. The device array layer is located between the color film layer and the first substrate. The color film layer is configured to allow light within a specific band range to pass. The color film layer includes a plurality of color stoppers. The device array layer includes a plurality of light transmission film layers and a plurality of light shielding film layers that are disposed in a laminated manner. The plurality of light transmission film layers allow visible light to pass. One or more of the plurality of light transmission film layers are patterned film layers. The plurality of light shielding film layers can shield visible light. The plurality of light shielding film layers are patterned film layers.

The first display part includes the plurality of color stoppers, parts that are of the plurality of light shielding film layers and that are located in the display region, and parts that are of the plurality of light transmission film layers and that are located in the display region. The device array layer forms a plurality of thin film transistors in the display region. In other words, the parts that are of the plurality of light shielding film layers and that are included in the first display part, and the parts that are of the plurality of light transmission film layers and that are included in the first display part jointly form the plurality of thin film transistors. The plurality of thin film transistors are disposed in an array. The first light transmission part includes a part that is of one or more light transmission film layers and that is located in the light transmission region.

In this embodiment, the first display part can be configured to control a deflection direction of a liquid crystal that is of the liquid crystal layer and that is located in the display region, and can also be configured to filter light. Therefore, when the first display part, the liquid crystal layer, and the second display part cooperate with each other, the display region can implement display.

The device array layer and the color film layer are successively formed on the first substrate, to form a color filter on array (color filter on array, COA) substrate. The second substrate and the second film group formed on the second substrate jointly form a meshing substrate. During manufacturing of the liquid crystal display panel, the color filter on array substrate and the meshing substrate are first formed separately, then the color filter on array substrate and the meshing substrate are meshed together, and then a liquid crystal is filled between the color filter on array substrate and the meshing substrate to form the liquid crystal layer. Because the color film layer is formed on the device array layer, a problem that the liquid crystal display panel has a high requirement on alignment can be resolved, and an aperture opening ratio of the liquid crystal display panel can also be increased.

In this embodiment, because the first light transmission part includes the part that is of the one or more light transmission film layers and that is located in the light transmission region, a difference between the thickness of the first light transmission part and the thickness of the first display part is comparatively small, and a thickness of a part that is of the liquid crystal layer and that is in the light transmission region is close to a thickness of a part that is of the liquid crystal layer and that is in the display region, to reduce a risk that a display anomaly (for example, a Newton's ring) occurs in the display region around the light transmission region due to an excessively large difference between layer structures, and improve display quality of the liquid crystal display. In addition, a quantity of stepped surfaces of the first transition part and/or an area of the stepped surface of the first transition part can be reduced, and difficulty in processing the first transition part can be reduced.

A film layer of the first light transmission part and some film layers of the first display part are film layers at a same layer, and can be manufactured in one formation process. Therefore, a formation procedure of the first light transmission part can be integrated in a formation procedure of the first display part, thereby reducing difficulty in processing the device array layer, and improving efficiency of processing the device array layer.

For a layer structure of the device array layer, refer to the foregoing embodiments.

The first transition part includes a part that is of one or more light transmission film layers and that is in the light shielding region. In this case, the first transition part allows visible light to pass. Alternatively, the first transition part includes a part that is of one or more light transmission film layers and that is in the light shielding region, and a part that is of one or more light shielding film layers and that is in the light shielding region. In this case, the first transition part can shield visible light.

In this embodiment, the first transition part may implement the step structure based on a variation of a quantity of film layers at different locations. For example, in a direction from the first display part to the first light transmission part, a quantity of film layers at different locations in the first transition part progressively decreases, so that a thickness progressively decreases, to form the step structure. Alternatively, the first transition part may form the step structure based on a variation of a thickness of a film layer that is of the first transition part and that is away from a top insulator layer of the first substrate.

In an optional embodiment, the second film group includes a black matrix and a flat layer. The black matrix is located between the second substrate and the flat layer. In this embodiment, the black matrix is independent of the color film layer. The second film group and the second substrate form a meshing substrate of a color filter on array substrate. The second display part includes a part of the black matrix and a part of the flat layer that are arranged in the display region. The flat layer can provide a flat formation surface in the display region, so that the second alignment layer can be evenly applied on the second display part. The second transition part includes a part of the black matrix and a part of the flat layer that are arranged in the light shielding region.

The second light transmission part is a via. In other words, the black matrix and the flat layer are disposed in the light transmission region in a hollow-out manner. A transmittance of the light transmission region is comparatively high. In the second transition part, a stepped surface may be formed at an end that is of the black matrix and that is close to the second light transmission part, so that the second transition part forms a step structure. A spacing between the second light transmission part and an end that is of the flat layer and that is close to the second light transmission part is greater than a spacing between the second light transmission part and the end that is of the black matrix and that is close to the second light transmission part, so that a part of a surface at the end that is of the black matrix and that is close to the second light transmission part is exposed, to form the stepped surface.

Alternatively, the second light transmission part includes a part that is of the flat layer and that is arranged in the light transmission region. In this case, a height difference between the second light transmission part and the second display part is comparatively small, or thicknesses of the second light transmission part and the second display part can be even the same, so that a risk that the second alignment layer accumulates on the second light transmission part is comparatively low.

When the thin film transistors in the device array layer are of the foregoing bottom gate structure, the first film group may further include a common electrode layer. The common electrode layer is made of a transparent conducting material.

In an optional embodiment, the second film group includes a black matrix and a flat layer. The black matrix is located between the second substrate and the flat layer. In this embodiment, the black matrix is independent of the color film layer. The second film group and the second substrate form a meshing substrate of a color filter on array substrate. The second display part includes a part of the black matrix and a part of the flat layer that are arranged in the display region. The second transition part includes a part of the black matrix and a part of the flat layer that are arranged in the light shielding region. The second light transmission part includes a part that is of the flat layer and that is arranged in the light transmission region. A surface that is of the flat layer and that is away from the second substrate is a flat surface.

In this embodiment, thicknesses of the second light transmission part, the second transition part, and the second display part are the same, and the flat layer can provide a continuous flat formation surface in the light transmission region, the light shielding region, and the display region. This helps reduce difficulty in manufacturing the second alignment layer. Therefore, the second alignment layer can be more evenly applied on the second display part, the second transition part, and the second light transmission part, a risk that the second alignment layer accumulates is comparatively low, and the liquid crystal display panel has higher display quality.

In an optional embodiment, the liquid crystal display panel further includes a support assembly. The support assembly is located between the first film group and the second film group, and penetrates the liquid crystal layer in a direction from the first substrate to the second substrate, to maintain a spacing between the first substrate and the second substrate.

In this application, the support assembly is configured to maintain the spacing (also referred to as a meshing gap) between the first substrate and the second substrate, so that the liquid crystal display panel is not easily deformed in a manufacturing or use process, thereby ensuring display quality of the liquid crystal display panel.

In an optional embodiment, the support assembly includes a plurality of first support columns. The plurality of first support columns are arranged away from the light transmission region. The plurality of first support columns are spaced from each other. The plurality of first support columns are arranged by directly facing the black matrix. In other words, projections of the plurality of first support columns on the second substrate are covered by a projection of the black matrix on the second substrate. The plurality of first support columns may be made of a transparent material or an opaque material.

In an optional embodiment, the support assembly further includes a second support column, and the second support column is arranged in the light transmission region. The second support column is made of a transparent material. In this embodiment, the second support column supports the second substrate and the first substrate that are located in the light transmission region, so that the liquid crystal display panel has a same meshing gap in the light transmission region and the display region, to avoid a display anomaly in the display region around the light transmission region. Therefore, the liquid crystal display has comparatively high display quality.

In an optional embodiment, there are a plurality of second support columns. The plurality of second support columns are arranged in the light transmission region and are spaced from each other. In this embodiment, the plurality of second support columns may be arranged at roughly uniform spacings, so that the entire light transmission region of the liquid crystal display panel has a comparatively uniform meshing gap.

When a quantity of second support columns is designed, a support requirement and a light transmission requirement need to be balanced, to have sufficient second support columns for maintaining the meshing gap while preventing disposing too many second support columns from causing an excessively low transmittance of the light transmission region.

In a direction from the first substrate to the second substrate, a height of the second support column is greater than that of the first support column. The height of the second support column is designed to properly support the second substrate and the first substrate. In this case, for a shape of the second support column, refer to a design of the first support column. The second support column and the first support column may be roughly in a shape of a truncated cone. The second support column and the first support column may be formed in one procedure, or may be formed in two procedures.

In an optional embodiment, there is one second support column. An area of an end face that is of the second support column and that faces the first substrate is greater than an area of an end face that is of the first support column and that faces the first substrate. An area of an end face that is of the second support column and that faces the second substrate is greater than an area of an end face that is of the first support column and that faces the second substrate.

In this embodiment, the second support column can provide a larger support area, so that the support assembly can stably support the light transmission region when there is one second support column.

In an optional embodiment, the second support column may be in a shape of a truncated cone, and two end faces of the second support column are in a circular shape. In this case, the two end faces of the second support column may cover the light transmission region as much as possible. For example, the second support column is formed on the second substrate, and an end face that is of the second support column and that faces the second substrate covers the light transmission region. In this case, an end face that is of the second support column and that faces the first substrate may cover the light transmission region or cover a part of the light transmission region. Because the second support column occupies much space or even all space of the liquid crystal layer in the light transmission region, the liquid crystal layer has a few liquid crystals or even no liquid crystal in the light transmission region.

In this embodiment, the second support column may be made of a high-transmittance material, to increase a transmittance of the light transmission region. For example, a transmittance of a material of the second support column may be higher than that of a liquid crystal material.

In an optional embodiment, an end face that is of the second support column and that faces the first substrate is in an annular shape. In this case, the second support column has an inner annular surface and an outer annular surface that are disposed opposite to each other. A liquid crystal is arranged in a space encircled by the inner annular surface. The second support column with the annular end face has comparatively high support strength.

In an optional embodiment, the support assembly further includes one or more third support columns, and the second support column is disposed around the one or more third support columns. In this embodiment, the one or more third support columns are disposed, so that the one or more third support columns and the second support column cooperate with each other to jointly support the second substrate and the first substrate. This can improve reliability of supporting, by the support assembly, a part that is of the liquid crystal display panel and that is in the light transmission region.

In an optional embodiment, the second support column includes a first support block and a second support block. The first support block and the second support block are arranged in a direction from the first substrate to the second substrate, and abut against each other. In this case, one of the first support block and the second support block is formed on the second substrate, and the other is formed on the first substrate. In a direction from the second substrate to the first substrate, a sum of heights of the first support block and the second support block is equal to a height of the second support column. In this embodiment, one second support column is divided into the first support block and the second support block. This helps reduce difficulty in forming the second support column, so that formation quality of the second support column is comparatively high.

An area of an end face that is of the first support block and that faces the second substrate is the same as an area of an end face that is of the second support block and that faces the first substrate. A height of the first support block may be the same as or different from that of the second support block.

In an optional embodiment, the liquid crystal display panel further includes a rubber frame. The rubber frame is located between the first substrate and the second substrate, and surrounds the display region. The light transmission region is located on an inner side of the rubber frame. The light shielding region is located on an inner side of the rubber frame. The liquid crystal layer is filled on an inner side of the rubber frame.

In this embodiment, the liquid crystal layer can be filled in all of the light transmission region, the light shielding region, and the display region, and no additional partition structure needs to be disposed between the light transmission region, the light shielding region, and the display region. This simplifies a manufacturing process of the liquid crystal display panel, so that costs of the liquid crystal display panel are comparatively low.

In an optional embodiment, the liquid crystal display panel further includes a first polarizer and a second polarizer. The first polarizer is located on a side that is of the first substrate and that is away from the first film group. The second polarizer is located on a side that is of the second substrate and that is away from the second film group. A polarization axis of the first polarizer is perpendicular to that of the second polarizer. At least one of the first polarizer and the second polarizer is disposed in the light transmission region in a hollow-out manner. To be specific, the first polarizer is disposed in the light transmission region in a hollow-out manner, the second polarizer is disposed in the light transmission region in a hollow-out manner, or both the first polarizer and the second polarizer are disposed in the light transmission region in a hollow-out manner. In this case, visible light may pass through the light transmission region.

When both the first polarizer and the second polarizer are disposed in the light transmission region in a hollow-out manner, a transmittance of the light transmission region is higher. This helps improve operating quality of the optical device.

According to a second aspect, an embodiment of this application provides a liquid crystal display (Liquid Crystal Display, LCD). The liquid crystal display includes a backlight module (backlight module) and the foregoing liquid crystal display panel. The backlight module is configured to provide a backlight source for the liquid crystal display panel. The backlight module has a light transmission part that directly faces the light transmission region. The light transmission part allows visible light to pass.

In this embodiment, the liquid crystal display panel of the liquid crystal display has the light transmission region, the light transmission region allows visible light to pass, and the backlight module is provided with the light transmission part that directly faces the light transmission region. Therefore, when the liquid crystal display panel is applied to an electronic device, an optical device such as a camera module in the electronic device can be placed below the light transmission region, to transmit visible light through the light transmission region (and the light transmission part), so as to alleviate a limitation imposed by the optical device on an arrangement space of the liquid crystal display. In addition, the light transmission region is surrounded by the display region, so that a larger display region can be provided on the liquid crystal display, to reduce a frame area of the electronic device, increase a display area of the electronic device, and increase a screen-to-body ratio of the electronic device.

The backlight module further includes a light emitting part. The light emitting part is disposed around the light transmission part. The light emitting part corresponds to the display region of the liquid crystal display panel.

In an optional embodiment, the light transmission part is a via. The optical device of the electronic device may be partially or fully accommodated in the via, so that an arrangement of the optical device and the liquid crystal display is more compact. The optical device and the liquid crystal display can share a space in a thickness direction of the electronic device. This helps make the electronic device light and thin.

According to a third aspect, an embodiment of this application further provides an electronic device. The electronic device includes a housing, an optical device, and the foregoing liquid crystal display. The liquid crystal display is mounted on the housing. The liquid crystal display and the housing jointly encircle an inner cavity of an entire system. The optical device is accommodated in the inner cavity of the entire system and directly faces the light transmission region.

In this embodiment, the optical device can transmit light through the light transmission region of the liquid crystal display, without occupying a lateral peripheral space of the liquid crystal display, so that a larger display region can be designed for the liquid crystal display, to increase a screen-to-body ratio of the electronic device.

The optical device may be a camera module, an ambient light sensor, an optical proximity sensor, or an optical fingerprint sensor. The electronic device may include one or more optical devices. The liquid crystal display panel may include one or more light transmission regions.

The electronic device further includes a cover plate. The cover plate is located on a side that is of the liquid crystal display and that is away from the inner cavity of the entire system. The liquid crystal display may be bonded to the cover plate by using a bonding layer, to jointly form a screen assembly. The bonding layer may be made of an optically clear adhesive material. A location that is at the bonding layer and that directly faces the light transmission region may be hollowed out.

### BRIEF DESCRIPTION OF DRAWINGS

To describe the technical solutions in the embodiments of this application or in the background more clearly, the following briefly describes the accompanying drawings for describing the embodiments of this application or the background.
FIG. 1 is a schematic structural diagram of an electronic device according to an embodiment of this application;
FIG. 2 is a schematic structural diagram of a partial structure of an electronic device shown in FIG. 1 at a line A-A according to an embodiment;
FIG. 3 is a schematic exploded view of a part of a structure shown in FIG. 2;
FIG. 4 is a schematic structural diagram of a partial structure of an electronic device shown in FIG. 1 at a line A-A according to another embodiment;
FIG. 5 is a schematic exploded view of a part of a structure shown in FIG. 4;
FIG. 6 is a schematic structural diagram of a liquid crystal display panel shown in FIG. 3 according to a first embodiment;
FIG. 7 is an enlarged schematic diagram of a structure at a location B in FIG. 6;
FIG. 8 is a schematic structural diagram of a partial structure of a structure shown in FIG. 7 according to an implementation;
FIG. 9 is a schematic structural diagram of a partial structure of a structure shown in FIG. 7 according to another implementation;
FIG. 10 is a schematic structural diagram of a partial structure of a structure shown in FIG. 7 according to still another implementation;
FIG. 11 is a schematic structural diagram of a second film layer and a first substrate in FIG. 6 according to an implementation;
FIG. 12 is a schematic structural diagram of a second film layer and a first substrate in FIG. 6 according to another implementation;
FIG. 13 is another schematic structural diagram of a liquid crystal display panel shown in FIG. 6;
FIG. 14 is a schematic structural diagram of a liquid crystal display panel shown in FIG. 3 according to a second embodiment;
FIG. 15 is a schematic diagram of a partial structure of a liquid crystal display panel shown in FIG. 14;
FIG. 16 is a schematic structural diagram of a liquid crystal display panel shown in FIG. 3 according to a third embodiment;
FIG. 17 is a schematic diagram of a partial structure of a liquid crystal display panel shown in FIG. 16;
FIG. 18 is a schematic structural diagram of a liquid crystal display panel shown in FIG. 3 according to a fourth embodiment;
FIG. 19 is a schematic diagram of a partial structure of a liquid crystal display panel shown in FIG. 18;
FIG. 20 is a schematic structural diagram of a liquid crystal display panel shown in FIG. 3 according to a fifth embodiment;
FIG. 21 is a schematic diagram of a partial structure of a liquid crystal display panel shown in FIG. 20;
FIG. 22 is a schematic structural diagram of a liquid crystal display panel shown in FIG. 3 according to a sixth embodiment;
FIG. 23 is a schematic diagram of a partial structure of a liquid crystal display panel shown in FIG. 22;
FIG. 24 is a schematic structural diagram of a liquid crystal display panel shown in FIG. 3 according to a seventh embodiment;
FIG. 25 is a schematic diagram of a partial structure of a liquid crystal display panel shown in FIG. 24;
FIG. 26 is a schematic structural diagram of a liquid crystal display panel shown in FIG. 3 according to an eighth embodiment;
FIG. 27 is a schematic structural diagram of a liquid crystal display panel shown in FIG. 3 according to a ninth embodiment;
FIG. 28 is a schematic structural diagram of a liquid crystal display panel shown in FIG. 3 according to a tenth embodiment;
FIG. 29 is a schematic structural diagram of a liquid crystal display panel shown in FIG. 3 according to an eleventh embodiment; and
FIG. 30 is a schematic structural diagram of a liquid crystal display panel shown in FIG. 3 according to a twelfth embodiment.

### DESCRIPTION OF EMBODIMENTS

The following describes the embodiments of this application with reference to the accompanying drawings in the embodiments of this application.

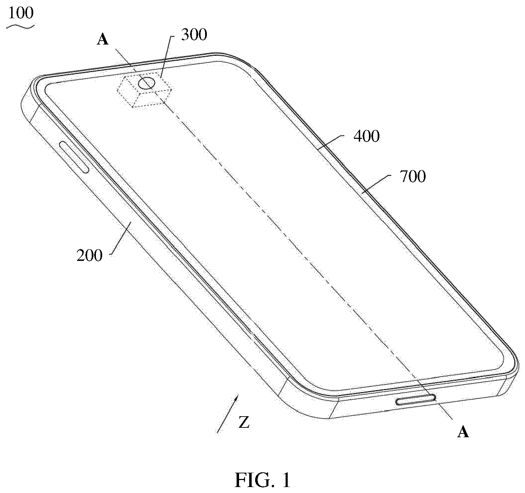

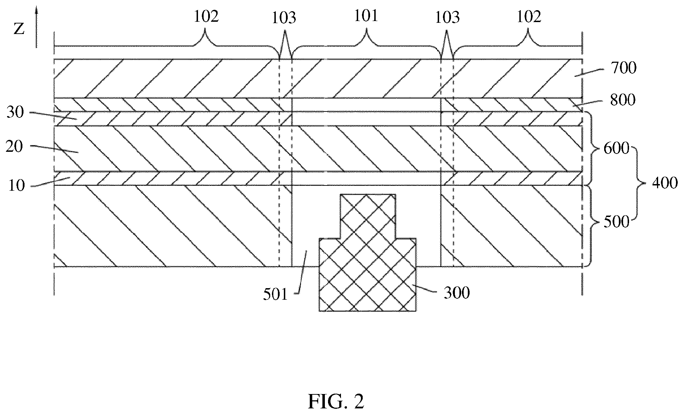

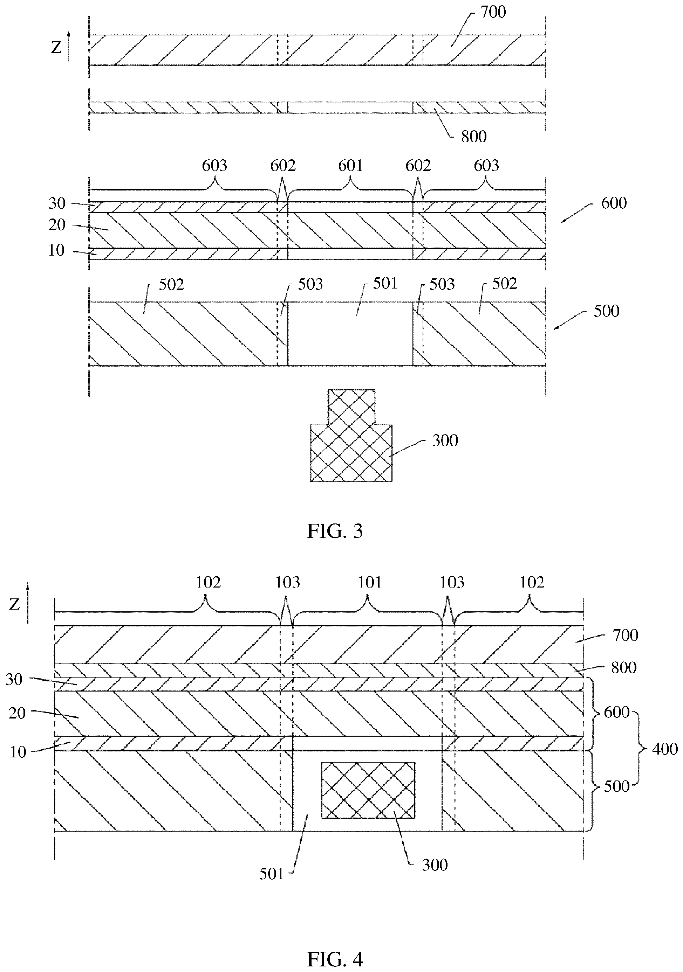

Refer to all of FIG. 1 to FIG. 3. FIG. 1 is a schematic structural diagram of an electronic device 100 according to an embodiment of this application. FIG. 2 is a schematic structural diagram of a partial structure of the electronic device 100 shown in FIG. 1 at a line A-A according to an embodiment. FIG. 3 is a schematic exploded view of a part of the structure shown in FIG. 2.

The electronic device 100 may be any device with communication and storage functions, for example, a tablet computer, a mobile phone, an e-reader, a notebook computer, an in-vehicle device, or a wearable device. The embodiment shown in FIG. 1 is described by using an example in which the electronic device 100 is a mobile phone.

The electronic device 100 includes a housing 200, an optical device 300, and a liquid crystal display (liquid crystal display, LCD) 400. The liquid crystal display 400 is mounted on the housing 200. The housing 200 may include a frame and a rear cover. The frame is disposed around a periphery of the rear cover. The liquid crystal display 400 is disposed by covering a side that is of the frame and that is away from the rear cover. The liquid crystal display 400 and the housing 200 jointly encircle an inner cavity of an entire system. The optical device 300 is accommodated in the inner cavity of the entire system. The optical device 300 may be a camera module, an ambient light sensor, an optical proximity sensor, or an optical fingerprint sensor. Alternatively, the optical device 300 may be an active light emitting device such as a laser or an infrared remote control lamp (for example, an infrared light emitting diode lamp).

The structure shown in FIG. 2 is described by using an example in which the optical device 300 is a camera module. The structure shown in FIG. 2 is further applicable to another optical device 300 with visible light as recognizable light, for example, an ambient light sensor or an optical fingerprint sensor for recognizing visible light.

The liquid crystal display 400 includes a backlight module (backlight module) 500 and a liquid crystal display panel 600. The backlight module 500 is configured to provide a backlight source for the liquid crystal display panel 600. The liquid crystal display panel 600 has a light transmission region 601, a light shielding region 602 surrounding the light transmission region 601, and a display region 603 surrounding the light shielding region 602. The light shielding region 602 is located between the light transmission region 601 and the display region 603. The light transmission region 601 allows visible light to pass. The light shielding region 602 can shield visible light. The display region 603 is configured to display an image. The backlight module 500 has a light transmission part 501 that directly faces the light transmission region 601. The light transmission part 501 allows visible light to pass. The optical device 300 is disposed by directly facing the light transmission region 601.

In this embodiment, the liquid crystal display panel 600 of the liquid crystal display 400 has the light transmission region 601, the light transmission region 601 allows visible light to pass, and the backlight module 500 has the light transmission part 501 that directly faces the light transmission region 601. Therefore, the optical device 300 such as the camera module in the electronic device 100 can be placed below the light transmission region 601, to transmit visible light through the light transmission region 601 (and the light transmission part 501), without occupying a lateral peripheral space of the liquid crystal display 400, so as to alleviate a limitation imposed by the optical device 300 on an arrangement space of the liquid crystal display 400. In addition, the light transmission region 601 is surrounded by the display region 603, so that a larger display region 603 can be provided on the liquid crystal display 400, to reduce a frame area of the electronic device 100, increase a display area of the electronic device 100, and increase a screen-to-body ratio of the electronic device 100.

The backlight module 500 further includes a light emitting part 502. The light emitting part 502 is disposed around the light transmission part 501. The light emitting part 502 corresponds to the display region 603 of the liquid crystal display panel 600. The backlight module 500 further includes a mechanical part 503 located between the light transmission part 501 and the light emitting part 502. The mechanical part 503 may be used for arranging a peripheral structure (for example, a light source or a frame) of the backlight module 500. The mechanical part 503 is disposed by directly facing the light shielding region 602.

In this application, a light transmission region of the liquid crystal display 400 corresponds to the light transmission region 601 of the liquid crystal display panel 600 of the liquid crystal display 400, and the light transmission region of the liquid crystal display 400 coincides with the light transmission region 601 of the liquid crystal display panel 600. A display region of the liquid crystal display 400 corresponds to the display region 603 of the liquid crystal display panel 600 of the liquid crystal display 400, and the display region of the liquid crystal display 400 coincides with the display region 603 of the liquid crystal display panel 600. A light shielding region is also formed between the light transmission region and the display region of the liquid crystal display 400.

In an optional embodiment, referring to both FIG. 2 and FIG. 3, the light transmission part 501 of the backlight module 500 is a via. The optical device 300 of the electronic device 100 may be partially or fully accommodated in the via, so that an arrangement of the optical device 300 and the liquid crystal display 400 is more compact. The optical device 300 and the liquid crystal display 400 can share a space in a thickness direction Z of the electronic device 100. This helps make the electronic device 100 light and thin. The thickness direction Z of the electronic device 100 is roughly perpendicular to the liquid crystal display 400.

In another embodiment, the light transmission part 501 of the backlight module 500 may be made of a light guide material. The light guide material may be a transparent material. The optical device 300 is located on a side that is of the light transmission part 501 and that is away from the light transmission region 601 of the liquid crystal display panel 600. The light transmission part 501 and the light transmission region 601 are configured to jointly transmit visible light.

In an optional embodiment, referring to both FIG. 2 and FIG. 3, the liquid crystal display panel 600 includes a first polarizer 10, a liquid crystal box 20, and a second polarizer 30 that are successively disposed in a laminated manner. In other words, the first polarizer 10 and the second polarizer 30 are separately located on two opposite sides of the liquid crystal box 20. A part that is of the liquid crystal box 20 and that is in the light transmission region 601 allows visible light to pass. A part that is of the liquid crystal box 20 and that is in the light shielding region 602 can shield visible light. A part that is of the liquid crystal box 20 and that is in the display region 603 is configured to display an image.

A polarization axis of the first polarizer 10 is perpendicular to that of the second polarizer 30. At least one of the first polarizer 10 and the second polarizer 30 is disposed in the light transmission region 601 in a hollow-out manner. To be specific, the first polarizer 10 is disposed in the light transmission region 601 in a hollow-out manner, the second polarizer 30 is disposed in the light transmission region 601 in a hollow-out manner, or both the first polarizer 10 and the second polarizer 30 are disposed in the light transmission region 601 in a hollow-out manner. In this case, visible light may pass through the light transmission region 601.

When both the first polarizer 10 and the second polarizer 30 are disposed in the light transmission region 601 in a hollow-out manner, a transmittance of the light transmission region 601 is higher. This helps improve operating quality of the optical device 300. The structures shown in FIG. 2 and FIG. 3 are described by using an example in which both the first polarizer 10 and the second polarizer 30 are disposed in the light transmission region 601 in a hollow-out manner.

The first polarizer 10 may be located between the liquid crystal box 20 and the backlight module 500, and the second polarizer 30 is located on a side that is of the liquid crystal box 20 and that is away from the backlight module 500. In another embodiment, locations of the first polarizer 10 and the second polarizer 30 may be exchanged.

At least one of the first polarizer 10 and the second polarizer 30 may be disposed in the light shielding region 602 in a hollow-out manner. Alternatively, at least one of the first polarizer 10 and the second polarizer 30 may cover the light shielding region 602.

In an optional embodiment, referring to both FIG. 2 and FIG. 3, the electronic device 100 further includes a cover plate 700. The cover plate 700 is located on a side that is of the liquid crystal display 400 and that is away from the inner cavity of the entire system. The liquid crystal display 400 may be bonded to the cover plate 700 by using a bonding layer 800, to jointly form a screen assembly. In this application, a light transmission region 101 of the screen assembly corresponds to the light transmission region 601 of the liquid crystal display panel 600 of the screen assembly, and the light transmission region 101 of the screen assembly coincides with the light transmission region 601 of the liquid crystal display panel 600. A display region 102 of the screen assembly corresponds to the display region 603 of the liquid crystal display panel 600 of the screen assembly, and the display region 102 of the screen assembly coincides with the display region 603 of the liquid crystal display panel 600. A light shielding region 103 that is of the screen assembly and that is located between the light transmission region 101 and the display region 102 corresponds to the light shielding region 602 of the liquid crystal display panel 600 of the screen assembly.

The bonding layer 800 may be made of an optically clear adhesive (Optically Clear Adhesive, OCA) material. A location that is at the bonding layer 800 and that directly faces the light transmission region 601 may be hollowed out, to ensure a high transmittance of a part that is of the screen assembly and that corresponds to the light transmission region 601. In another embodiment, the bonding layer 800 may alternatively cover the light transmission region 601.

Optionally, a touch function may be integrated in the liquid crystal display 400. For example, the liquid crystal display 400 may further include a touch layer. The touch layer may be located between the first polarizer 10 and the liquid crystal box 20, in the liquid crystal box 20, or between the liquid crystal box 20 and the first polarizer 10. In another embodiment, a touch film layer may be alternatively disposed between the cover plate 700 and the liquid crystal display 400, so that a touch function is integrated in the screen assembly.

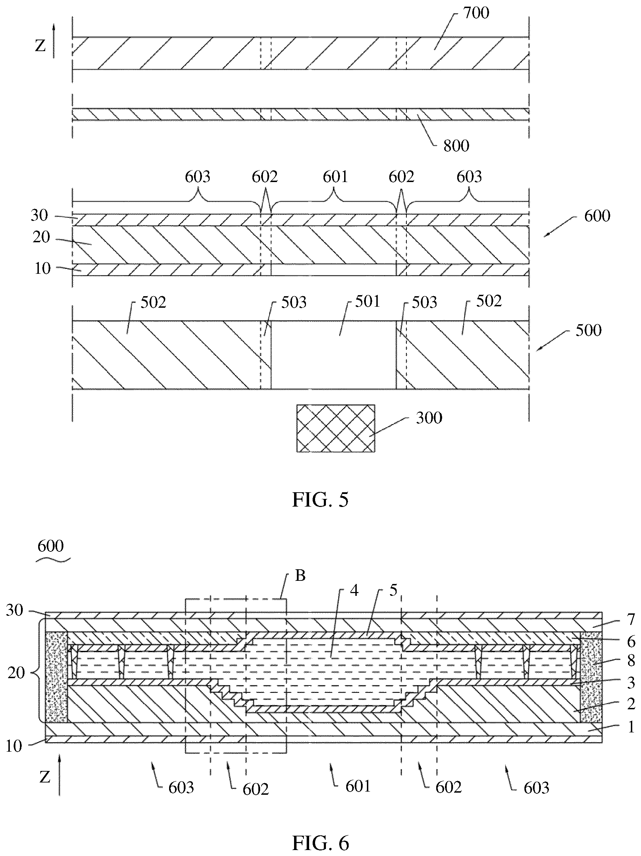

Refer to both FIG. 4 and FIG. 5. FIG. 4 is a schematic structural diagram of a partial structure of the electronic device 100 shown in FIG. 1 at a line A-A according to another embodiment. FIG. 5 is a schematic exploded view of a part of the structure shown in FIG. 4. The structure shown in FIG. 4 is described by using an example in which the optical device 300 is an optical proximity sensor. The structure shown in FIG. 4 is further applicable to another optical device 300 with invisible light as recognizable light, for example, an optical fingerprint sensor for recognizing invisible light.

In a conventional liquid crystal display, a film layer or a plate that allows visible light to pass also allows invisible light to pass. In this application, a material of some film layers (a specific film layer structure is described in the following) or plates that are of the liquid crystal display panel 600 and that are located in the light transmission region 601 may be designed with reference to a conventional solution. Because a part that is of the liquid crystal display panel 600 and that is located in the light transmission region 601 allows visible light to pass, the part that is of the liquid crystal display panel 600 and that is located in the light transmission region 601 also allows invisible light to pass. The light transmission part 501 in the backlight module 500 also allows invisible light to pass. In this application, the optical device 300 with invisible light as recognizable light can transmit light through the light transmission region 601 of the liquid crystal display panel 600 (and the light transmission part 501 of the backlight module 500).

A main difference between this embodiment and the foregoing embodiment is as follows: One of the first polarizer 10 and the second polarizer 30 is disposed in the light transmission region 601 in a hollow-out manner. For example, the first polarizer 10 covers the display region 603 and is away from the light transmission region 601, and the second polarizer 30 covers the light transmission region 601 and the display region 603. Because the optical device 300 with invisible light as recognizable light has a comparatively low requirement on a transmittance, the device requirement can be met provided that a hole is provided on one of the first polarizer 10 and the second polarizer 30. In this case, the bonding layer 800 located between the first polarizer 10 and the cover plate 700 may also cover the light transmission region 601, to form a continuous bonding film layer. Certainly, in another embodiment, both the first polarizer 10 and the second polarizer 30 may be alternatively disposed in the light transmission region 601 in a hollow-out manner.

In this application, the electronic device 100 may include one or more optical devices 300. The liquid crystal display panel 600 may include one or more light transmission regions 601, and the light transmission part 501 of the backlight module 500 is disposed by corresponding to the light transmission region 601. For example, the electronic device 100 includes a plurality of optical devices 300, the liquid crystal display panel 600 includes a plurality of light transmission regions 601, and the plurality of optical devices 300 directly face the plurality of light transmission regions 601 separately, to transmit light through the plurality of light transmission regions 601. One light transmission region 601 may provide a light transmission channel for one optical device 300, or may provide light transmission channels for a plurality of optical devices 300.

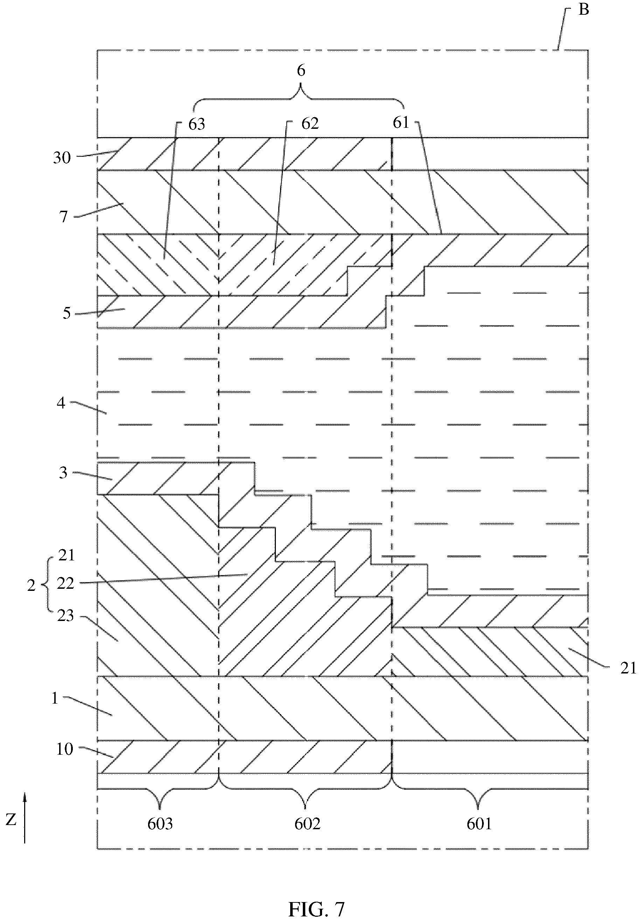

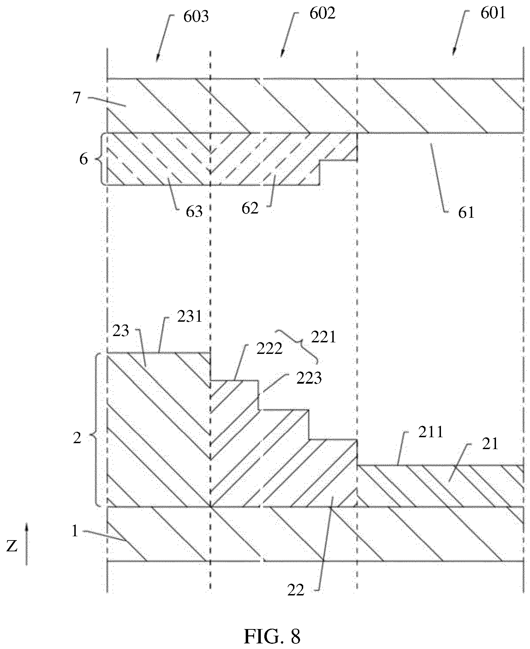

Refer to all of FIG. 6 to FIG. 8. FIG. 6 is a schematic structural diagram of the liquid crystal display panel 600 shown in FIG. 3 according to a first embodiment. FIG. 7 is an enlarged schematic diagram of a structure at a location B in FIG. 6. FIG. 8 is a schematic structural diagram of a partial structure of the structure shown in FIG. 7 according to an implementation.

The liquid crystal box 20 of the liquid crystal display panel 600 includes a first substrate 1, a first film group 2, a first alignment layer 3, a liquid crystal layer 4, a second alignment layer 5, a second film group 6, and a second substrate 7 that are successively disposed in a laminated manner. The first film group 2 includes a plurality of film layers. The first film group 2 is formed on the first substrate 1. The first alignment layer 3 is formed on the first film group 2. The second film group 6 includes one or more film layers. The second film group 6 is formed on the second substrate 7. A part of the second alignment layer 5 is formed on the second film group 6, and a part of the second alignment layer 5 is formed on the second substrate 7. The first polarizer 10 is located on a side that is of the first substrate 1 and that is away from the first film group 2. The second polarizer 30 is located on a side that is of the second substrate 7 and that is away from the second film group 6.

Both the first substrate 1 and the second substrate 7 are made of a transparent material, and continuously cover the light transmission region 601, the light shielding region 602, and the display region 603. The first substrate 1 and the second substrate 7 may be made of a glass material. The first substrate 1 and the second substrate 7 each are a plate with a continuous surface, and have sufficient structural strength, so that overall strength of the liquid crystal display panel 600 is comparatively high, and the liquid crystal display panel 600 does not easily break.

The first alignment layer (alignment layer, also referred to as an orientation layer) 3, the liquid crystal layer (liquid crystal layer) 4, and the second alignment layer 5 are all located in the light transmission region 601, the light shielding region 602, and the display region 603. Both the first alignment layer 3 and the second alignment layer 5 are made of a transparent material. The first alignment layer 3 and the second alignment layer 5 are separately located on two opposite sides of the liquid crystal layer 4, and are in direct contact with the liquid crystal layer 4. The liquid crystal layer 4 is sandwiched between the first alignment layer 3 and the second alignment layer 5. The first alignment layer 3 and the second alignment layer 5 are configured to provide a pre-tilt angle for a liquid crystal in the liquid crystal layer 4.

The first film group 2 includes a first display part 23 located in the display region 603, a first transition part 22 located in the light shielding region 602, and a first light transmission part 21 located in the light transmission region 601. The first transition part 22 surrounds the first light transmission part 21. The first display part 23 surrounds the first transition part 22. The first transition part 22 connects the first light transmission part 21 to the first display part 23. The second film group 6 includes a second display part 63 located in the display region 603, a second transition part 62 located in the light shielding region 602, and a second light transmission part 61 located in the light transmission region 601. The second transition part 62 surrounds the second light transmission part 61. The second display part 63 surrounds the second transition part 62. The second transition part 62 connects the second light transmission part 61 to the second display part 63. In the embodiments shown in FIG. 6 to FIG. 8, the second light transmission part 61 is a via, and a part of the second alignment layer 5 is located in the second light transmission part 61. In another embodiment, the second light transmission part 61 may have a part whose one or more film layers are located in the light transmission region 601. For details, refer to the following embodiments.

The first display part 23 and the second display part 63 cooperate with each other to display an image. The first display part 23 and the second display part 63 are important components for displaying an image on the liquid crystal display panel 600, but are not all components. The first display part 23 and the second display part 63 cooperate with each other to jointly participate in and affect a display action of the liquid crystal display panel 600. When the liquid crystal display panel 600 performs displaying, cooperation of another structure is further required, for example, the liquid crystal layer 4, the first polarizer 10, and the second polarizer 30. Both the first light transmission part 21 and the second light transmission part 61 allow visible light to pass. At least one of the first transition part 22 and the second transition part 62 can shield visible light. To be specific, the first transition part 22 can shield visible light, the second transition part 62 can shield visible light, or both the first transition part 22 and the second transition part 62 can shield visible light.

In this embodiment, both the first substrate 1 and the second substrate 7 are made of a transparent material, the first alignment layer 3 and the second alignment layer 5 are made of a transparent material, the first light transmission part 21 that is of the first film group 2 and that is located in the light transmission region 601 allows visible light to pass, and the second light transmission part 61 that is of the second film group 6 and that is located in the light transmission region 601 allows visible light to pass. Therefore, the light transmission region 601 allows visible light to pass. When the liquid crystal display panel 600 is applied to the electronic device 100, the optical device 300 such as the camera module in the electronic device 100 can be placed below the light transmission region 601 of the liquid crystal display panel 600, to transmit visible light through the light transmission region 601, and alleviate a limitation imposed by the optical device 300 on an arrangement space of the liquid crystal display panel 600. In addition, the light transmission region 601 is surrounded by the display region 603, so that a larger display region 603 can be provided on the liquid crystal display panel 600, to reduce a frame area of the electronic device 100, increase a display area of the electronic device 100, and increase a screen-to-body ratio of the electronic device 100.

Referring to all of FIG. 6 to FIG. 8, in a direction Z from the first substrate 1 to the second substrate 7 (that is, a thickness direction of the liquid crystal display panel 600), a thickness of the first display part 23 is greater than that of the first light transmission part 21, and the first transition part 22 forms a step structure that connects the first display part 23 to the first light transmission part 21. A top surface 221 that is of the first transition part 22 and that is away from the first substrate 1 includes one or more stepped surfaces 222. In the direction Z from the first substrate 1 to the second substrate 7, the one or more stepped surfaces 222 are located between a top surface 231 that is of the first display part 23 and that is away from the first substrate 1 and a top surface 211 that is of the first light transmission part 21 and that is away from the first substrate 1. As shown in FIG. 8, the top surface 221 of the first transition part 22 may include three stepped surfaces 222. In another embodiment, the top surface 221 of the first transition part 22 may include another quantity of stepped surfaces 222. This is not strictly limited in this application.

In a conventional liquid crystal display panel, when there is a comparatively large difference between thicknesses of different parts of a film layer configured to bear an alignment layer, the alignment layer is likely to accumulate in a transition region between a thinner part and a thicker part, thereby causing a problem such as display mura (mura) or heterochromatic display on the liquid crystal display panel. For example, the alignment layer is likely to accumulate in an edge region that is of a thinner part and that is adjacent to a thicker part, thereby causing yellowing or blanching of the edge region.

In this embodiment, the step structure formed by the first transition part 22 of the liquid crystal display panel 600 can enable a gradual transition of a height difference between the first display part 23 and the first light transmission part 21, and the one or more stepped surfaces 222 of the first transition part 22 can bear the first alignment layer 3, thereby reducing a risk that the first alignment layer 3 accumulates at an edge of the top surface 211 (a surface away from the first substrate 1) of the first light transmission part 21, and effectively resolving a problem such as display mura or heterochromatic display in the light transmission region 601 of the liquid crystal display panel 600 due to accumulation of the alignment layer, so that the liquid crystal display panel 600 has comparatively high display quality.

The risk that the first alignment layer 3 accumulates at the edge of the top surface 211 of the first light transmission part 21 is comparatively low, and the first alignment layer 3 can be comparatively evenly applied on the top surface 211 of the first light transmission part 21. Therefore, a risk that light passing through the light transmission region 601 generates noise due to a foreign object is comparatively low, thereby ensuring operating quality of the optical device 300.

The step structure also helps improve a liquid crystal arrangement in the liquid crystal layer 4, so that the liquid crystal arrangement is more even, and the liquid crystal display panel 600 has higher display quality.

The one or more stepped surfaces 222 are roughly parallel to the first substrate 1. In this case, the one or more stepped surfaces 222 are easy to process, and can better bear the first alignment layer 3.

The thickness of the first light transmission part 21 is less than that of the first display part 23, that is, the first light transmission part 21 is thinner. This helps increase a transmittance of the light transmission region 601.

Parts that are of the first alignment layer 3 and the second alignment layer 5 and that are in the light transmission region 601 help control a liquid crystal in the light transmission region 601 to remain at a specific angle, so as to reduce a risk that light deviates in a transmission process, and improve operating quality of the optical device 300.

Because the liquid crystal display panel 600 has comparatively high strength, a shape and a size of the light transmission region 601, a quantity of light transmission regions 601, and a spacing between the light transmission region 601 and an edge of the liquid crystal display panel 600 are designed more flexibly and diversely. This helps improve overall reliability of the electronic device 100. For example, the shape of the light transmission region 601 may be a circle, an ellipse, a polygon, a rounded rectangle, or a runway (including two straight sides that are parallel to each other and arc sides that are oppositely connected between the two straight sides). There may be one or more light transmission regions 601. A plurality of light transmission regions 601 may separately provide light transmission channels for a plurality of optical devices 300. An arrangement manner of the plurality of light transmission regions 601 may be flexibly designed, for example, an array arrangement or an annular arrangement.

In an optional embodiment, a quantity of film layers of the first light transmission part 21 is a first value, and a quantity of film layers of the first display part 23 is a second value. The first value is less than the second value. A quantity of film layers of the first transition part 22 is within a range from the first value to the second value. The range from the first value to the second value is a range including the first value and the second value that act as a minimum value and a maximum value respectively.

In this embodiment, different film layers in the first film group 2 may be arranged differently in the light transmission region 601, the light shielding region 602, and the display region 603, so that the quantity of film layers of the first light transmission part 21 is different from that of the first display part 23, and the quantity of film layers of the first transition part 22 may be within the range from the first value to the second value. For example, some film layers in the first film group 2 may cover all of the light transmission region 601, the light shielding region 602, and the display region 603, some film layers in the first film group 2 may cover both the display region 603 and the light shielding region 602, and some film layers in the first film group 2 may cover only the display region 603. The first film group 2 can adjust thicknesses of the first light transmission part 21, the first transition part 22, and the first display part 23 by controlling quantities of film layers of the first light transmission part 21, the first transition part 22, and the first display part 23.

The second value is greater, that is, the quantity of film layers of the first display part 23 is greater. Therefore, the first display part 23 can form a comparatively complex layer structure, to adapt to the display region 603 of the liquid crystal display panel 600. The first value is smaller, that is, the quantity of film layers of the first light transmission part 21 is smaller. Therefore, a transmittance of the first light transmission part 21 is higher, and operating quality of the optical device 300 is higher.

In an optional embodiment, in the first transition part 22, the one or more stepped surfaces 222 are formed on a top surface that is away from a top film layer of the first substrate 1. When there are a plurality of stepped surfaces 222, the plurality of stepped surfaces 222 are formed at one film layer.

Alternatively, in the first transition part 22, the stepped surface 222 is formed at an end that is of one or more film layers and that faces the first light transmission part 21. When there are a plurality of stepped surfaces 222, the plurality of stepped surfaces 222 are formed at different film layers.

In FIG. 7 and FIG. 8, the top surface 221 of the first transition part 22 further includes a plurality of joint surfaces 223 that are spaced from each other. In accordance with the claimed invention, the stepped surface 222 is connected between two adjacent joint surfaces 223. In FIG. 8, four joint surfaces 223 are shown. In another embodiment, the stepped surface 222 may alternatively include another quantity of joint surfaces 223. This is not strictly limited in this application.

The stepped surface 222 is roughly perpendicular to the joint surface 223 in an embodiment outside of the claimed invention. In this case, the top surface 221 of the first transition part 22 can include a stepped surface 222 with a larger area, to improve an effect of bearing the first alignment layer 3, and reduce a risk that the first alignment layer 3 accumulates on the light transmission region 601 (to be specific, the first light transmission part 21).

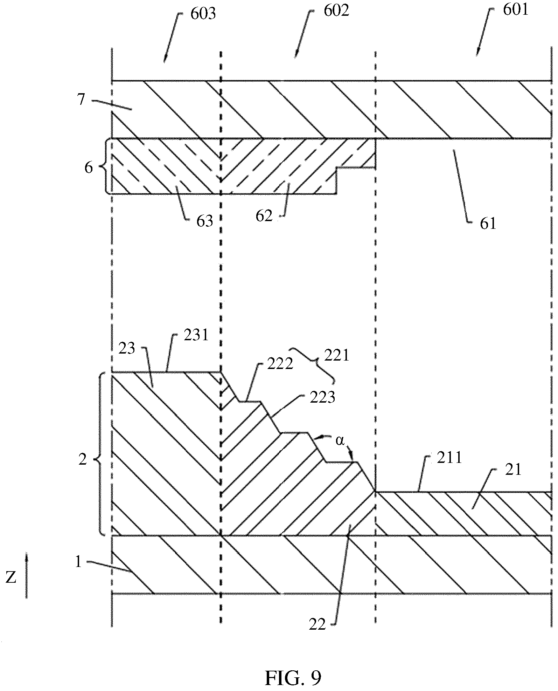

FIG. 9 is a schematic structural diagram of a partial structure of the structure shown in FIG. 7 in accordance with the claimed invention. An included angle α of 120° to 135° is formed between the stepped surface 222 and the joint surface 223 that are connected. The joint surface 223 may tilt relative to the first substrate 1. In this case, difficulty in forming each film layer in the first transition part 22 is comparatively low. This helps increase a product yield rate of the liquid crystal display panel 600. In addition, this can avoid a problem that the stepped surface 222 has a comparatively small area and cannot effectively bear the first alignment layer 3 because an oblique angle between the stepped surface 222 and the joint surface 223 is excessively large.

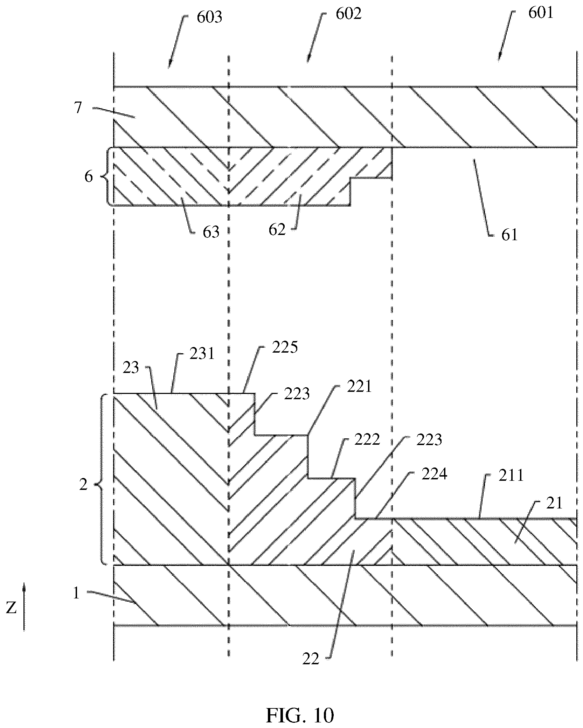

In an optional embodiment, FIG. 10 is a schematic structural diagram of a partial structure of the structure shown in FIG. 7 according to still another implementation. The top surface 221 of the first transition part 22 further includes a transition surface 224. The transition surface 224 is connected between the joint surface 223 and the top surface 211 that is of the first light transmission part 21 and that is away from the first substrate 1. The joint surface 223 is a joint surface 223 closest to the first light transmission part 21 among the plurality of joint surfaces 223. The transition surface 224 is flush with the top surface 211 of the first light transmission part 21. A smooth transition is achieved between the transition surface 224 and the top surface 211 of the first light transmission part 21.

In this embodiment, the first transition part 22 is provided with the transition surface 224 that is flush with the top surface 211 of the first light transmission part 21, and the transition surface 224 is connected closer to the joint surface 223 than the top surface 211 of the first light transmission part 21. Therefore, even if the first alignment layer 3 slightly accumulates, the first alignment layer 3 accumulates on the transition surface 224, and a part that is of the first alignment layer 3 and that is located on the top surface 211 of the first light transmission part 21 is applied evenly, without or almost without accumulation. This can effectively resolve a problem such as display mura (mura) or heterochromatic display caused by accumulation of the alignment layer.

In an optional embodiment, referring to FIG. 10, the top surface 221 of the first transition part 22 further includes a second transition surface 225. The second transition surface 225 is connected between the top surface 231 of the first display part 23 and the joint surface 223. The second transition surface 225 is smoothly connected to the top surface 231 of the first display part 23.

In this embodiment, because the second transition surface 225 is smoothly connected to the top surface 231 of the first display part 23, the first alignment layer 3 can be evenly applied on a cross-connection region between the first transition part 22 and the first display part 23, to ensure display quality of the liquid crystal display panel 600.

In an optional embodiment, referring to FIG. 6, the liquid crystal display panel 600 further includes a rubber frame 8. The rubber frame 8 is located between the first substrate 1 and the second substrate 7, and surrounds the display region 603. The light transmission region 601 is located on an inner side of the rubber frame 8. The light shielding region 602 is located on an inner side of the rubber frame 8. The liquid crystal layer 4 is filled on an inner side of the rubber frame 8.

In this embodiment, the liquid crystal layer 4 can be filled in all of the light transmission region 601, the light shielding region 602, and the display region 603, and no additional partition structure needs to be disposed between the light transmission region 601, the light shielding region 602, and the display region 603. This simplifies a manufacturing process of the liquid crystal display panel 600, so that costs of the liquid crystal display panel 600 are comparatively low.

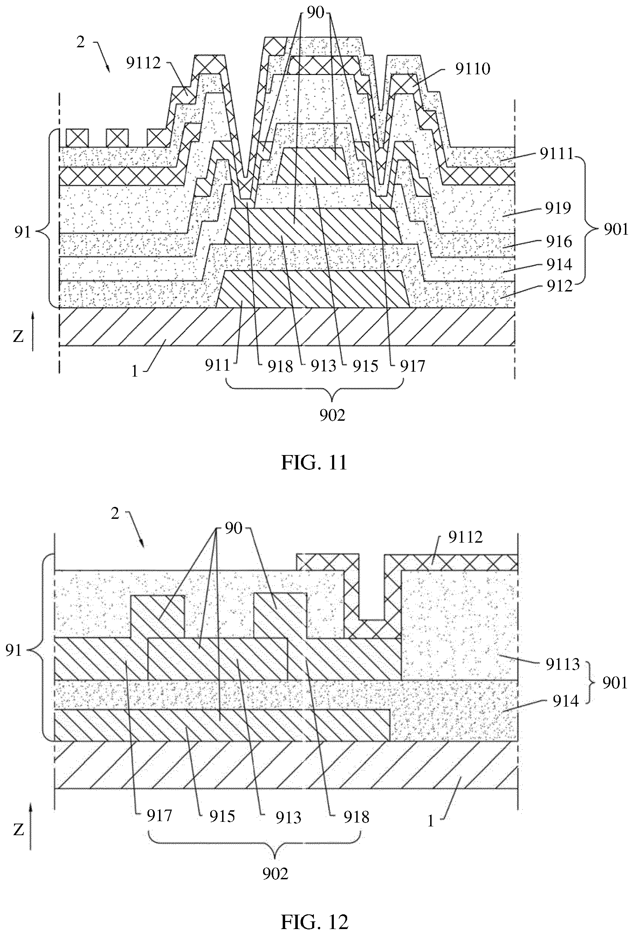

In an optional embodiment, refer to all of FIG. 7, FIG. 11, and FIG. 12. FIG. 11 is a schematic structural diagram of the second film layer 2 and the first substrate 1 in FIG. 6 according to an implementation. FIG. 12 is a schematic structural diagram of the second film layer 2 and the first substrate 1 in FIG. 6 according to another implementation.

The first film group 2 includes a device array layer 91. The device array layer 91 includes a plurality of light transmission film layers 901 and a plurality of light shielding film layers 902 that are disposed in a laminated manner. The plurality of light transmission film layers 901 allow visible light to pass. One or more of the plurality of light transmission film layers 901 are patterned film layers. The plurality of light shielding film layers 902 can shield visible light. The plurality of light shielding film layers 902 are patterned film layers.

The first display part 23 includes parts that are of the plurality of light shielding film layers 902 and that are located in the display region 603, and parts that are of the plurality of light transmission film layers 901 and that are located in the display region 603. The device array layer 91 forms a plurality of thin film transistors (thin film transistor, TFT) 90 in the display region 603. In other words, the parts that are of the plurality of light shielding film layers 902 and that are included in the first display part 23, and the parts that are of the plurality of light transmission film layers 901 and that are included in the first display part 23 jointly form the plurality of thin film transistors 90. The plurality of thin film transistors 90 are disposed in an array. The first light transmission part 21 includes a part that is of one or more light transmission film layers 901 and that is located in the light transmission region 601.

In this embodiment, because the first light transmission part 21 includes the part that is of the one or more light transmission film layers 901 and that is located in the light transmission region 601, a difference between the thickness of the first light transmission part 21 and the thickness of the first display part 23 is comparatively small, and a thickness of a part that is of the liquid crystal layer 4 and that is in the light transmission region 601 is close to a thickness of a part that is of the liquid crystal layer 4 and that is in the display region 603, to reduce a risk that a display anomaly (for example, a Newton's ring) occurs in the display region 603 around the light transmission region 601 due to an excessively large difference between layer structures, and improve display quality of the liquid crystal display 400. In addition, a quantity of stepped surfaces 222 of the first transition part 22 and/or an area of the stepped surface 222 of the first transition part 22 can be reduced, and difficulty in processing the first transition part 22 can be reduced. The "quantity and/or area" means including only the quantity, or including only the area, or including both the quantity and the area.

A film layer of the first light transmission part 21 and some film layers of the first display part 23 are film layers at a same layer, and can be manufactured in one formation process. Therefore, a formation procedure of the first light transmission part 21 can be integrated in a formation procedure of the first display part 23, thereby reducing difficulty in processing the device array layer 91, and improving efficiency of processing the device array layer 91.

Referring to FIG. 11, the thin film transistors 90 in the device array layer 91 may be of a top gate structure. An example is as follows:
The device array layer 91 includes a shield layer 911, a buffer layer 912, a semiconductor layer 913, a gate insulator layer (gate insulator layer) 914, a gate 915, a first insulator layer 916, a source 917, a drain 918, a second insulator layer 919, a common electrode 9110, a third insulator layer 9111, and a pixel electrode 9112. The shield layer 911 is formed on the first substrate 1. The buffer layer 912 is formed on the first substrate 1 and covers the shield layer 911. The semiconductor layer 913 is located on a side that is of the buffer layer 912 and that is away from the first substrate 1, and directly faces the shield layer 911. The semiconductor layer 913 may be made of a low temperature poly-silicon (low temperature poly-silicon, LTPS) material. The semiconductor layer 913 includes a channel region, two lightly doped regions, and two heavily doped regions. The two lightly doped regions are separately connected to two opposite ends of the channel region. The two heavily doped regions are separately connected to two ends that are of the two lightly doped regions and that are away from the channel region. The gate insulator layer 914 is located on a side that is of the buffer layer 912 and that is away from the first substrate 1, and covers the semiconductor layer 913. The gate insulator layer 914 is provided with a first hole and a second hole that directly face the two heavily doped regions separately. The gate 915 is located on a side that is of the gate insulator layer 914 and that is away from the buffer layer 912, and is disposed by directly facing the channel region. The first insulator layer 916 is located on a side that is of the gate insulator layer 914 and that is away from the buffer layer 912, and covers the gate 915. The first insulator layer 916 is provided with a third hole connected to the first hole and a fourth hole connected to the second hole. The source 917 and the drain 918 are located on a side that is of the first insulator layer 916 and that is away from the gate insulator layer 914. The source 917 is connected to one of the heavily doped regions through the third hole and the first hole. The drain 918 is connected to the other heavily doped region through the fourth hole and the second hole. The second insulator layer 919 is located on a side that is of the first insulator layer 916 and that is away from the gate insulator layer 914, and covers the source 917 and the drain 918. The second insulator layer 919 is provided with a fifth hole that directly faces the drain 918 (or the source 917). The common electrode 9110 is located on a side that is of the second insulator layer 919 and that is away from the first insulator layer 916. The third insulator layer 9111 is located on a side that is of the second insulator layer 919 and that is away from the first insulator layer 916, and covers the common electrode 9110. The third insulator layer 9111 is provided with a sixth hole connected to the fifth hole. The pixel electrode 9112 is located on a side that is of the third insulator layer 9111 and that is away from the second insulator layer 919, and is connected to the drain 918 (or the source 917) through the sixth hole and the fifth hole. The thin film transistors 90 include the semiconductor layer 913, the gate 915, the source 917, and the drain 918.

In this case, the plurality of light shielding film layers 902 may include the shield layer 911, the semiconductor layer 913, the gate 915, the source 917, the drain 918, and the like. The plurality of light transmission film layers 901 may include the buffer layer 912, the gate insulator layer 914, the first insulator layer 916, the second insulator layer 919, and the third insulator layer 9111. When the pixel electrode 9112 and the common electrode 9110 are made of a transparent material, the pixel electrode 9112 and the common electrode 9110 may also belong to the plurality of light transmission film layers 901.

Alternatively, referring to FIG. 12, the thin film transistors 90 in the device array layer 91 may be of a bottom gate structure. An example is as follows:
The device array layer 91 includes a gate 915, a gate insulator layer 914, a semiconductor layer 913, a source 917, a drain 918, an insulator layer 9113, and a pixel electrode 9112. The gate 915 is formed on the first substrate 1. The gate insulator layer 914 is formed on the first substrate 1 and covers the gate 915. The semiconductor layer 913 is located on a side that is of the gate insulator layer 914 and that is away from the gate 915, and directly faces the gate 915. The semiconductor layer 913 may be made of an amorphous silicon (amorphous silicon, α-Si) material. The source 917 is located on a side that is of the gate insulator layer 914 and that is away from the first substrate 1, and is connected to an end of the semiconductor layer 913. The drain 918 is located on a side that is of the gate insulator layer 914 and that is away from the first substrate 1, and is connected to the other end of the semiconductor layer 913. The insulator layer 9113 is located on a side that is of the gate insulator layer 914 and that is away from the first substrate 1, and covers the source 917, the semiconductor layer 913, and the drain 918. The insulator layer 9113 is provided with a via that directly faces the drain 918 (or the source 917). The pixel electrode 9112 is located on a side that is of the insulator layer 9113 and that is away from the gate insulator layer 914, and is connected to the drain 918 (or the source 917) through the via. The thin film transistors 90 include the semiconductor layer 913, the gate 915, the source 917, and the drain 918.

In this case, the plurality of light shielding film layers 902 may include the gate 915, the semiconductor layer 913, the source 917, and the drain 918. The plurality of light transmission film layers 901 may include the gate insulator layer 914 and the insulator layer 9113. When the pixel electrode 9112 is made of a transparent material, the pixel electrode 9112 may also belong to the plurality of light transmission film layers 901.

In another embodiment, a layer structure of the device array layer 91 may be different from that in the foregoing two embodiments, in other words, the device array layer 91 may be of another layer structure. The plurality of light transmission film layers 901 and the plurality of light shielding film layers 902 correspondingly include other film layers.

The first transition part 22 includes a part that is of one or more light transmission film layers 901 and that is in the light shielding region 602. In this case, the first transition part 22 allows visible light to pass. Alternatively, the first transition part 22 includes a part that is of one or more light transmission film layers 901 and that is in the light shielding region 602, and a part that is of one or more light shielding film layers 902 and that is in the light shielding region 602. In this case, the first transition part 22 can shield visible light.

In this embodiment, the first transition part 22 may implement the step structure based on a variation of a quantity of film layers at different locations. For example, in a direction from the first display part 23 to the first light transmission part 21, a quantity of film layers at different locations in the first transition part 22 progressively decreases, so that a thickness progressively decreases, to form the step structure. Alternatively, the first transition part 22 may form the step structure based on a variation of a thickness of a film layer that is of the first transition part 22 and that is away from a top insulator layer of the first substrate 1.

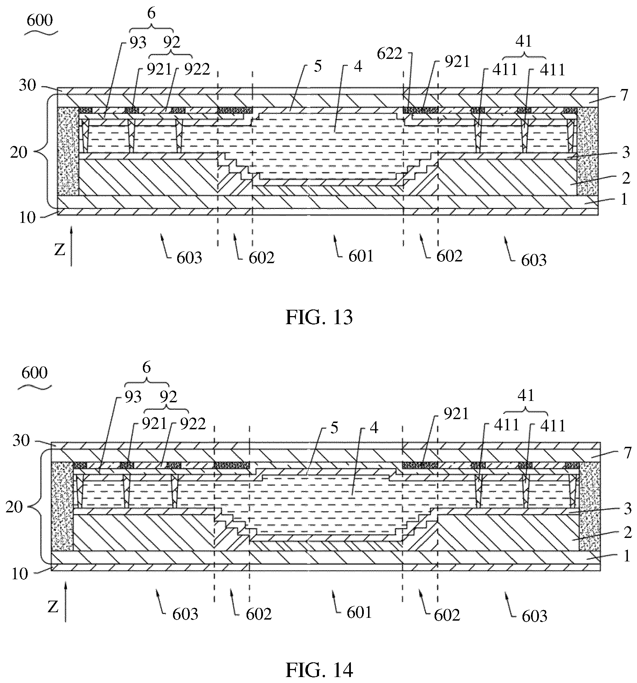

In an optional embodiment, refer to both FIG. 7 and FIG. 13. FIG. 13 is another schematic structural diagram of the liquid crystal display panel 600 shown in FIG. 6. The second film group 6 includes a color film layer 92 and a flat layer 93. The color film layer 92 is also referred to as a color filter (color filter, CF) layer, and is configured to allow light within a specific band range to pass. The color film layer 92 is located between the second substrate 7 and the flat layer 93. The color film layer 92 includes a black matrix (black matrix, BM) 921 and a plurality of color stoppers 922 alternately disposed with the black matrix 921. The plurality of color stoppers 922 include a red (R) color stopper, a green (G) color stopper, and a blue (B) color stopper. In an embodiment, the plurality of color stoppers 922 may further include a white (W) color stopper or a yellow (Y) color stopper.

In this embodiment, the black matrix 921 is integrated in the color film layer 92, and the black matrix 921 and the plurality of color stoppers 922 share a part of thickness space of the liquid crystal display panel 600.

The second display part 63 includes the plurality of color stoppers 922, a part of the black matrix 921, and a part of the flat layer 93 that are arranged in the display region 603. The second light transmission part 61 is a via. In other words, the color film layer 92 and the flat layer 93 are disposed in the light transmission region 601 in a hollow-out manner. The second transition part 62 includes a part of the black matrix 921 and a part of the flat layer 93 that are arranged in the light shielding region 602. In this case, the second transition part 62 can shield visible light.

In the second transition part 62, a stepped surface 622 is formed at an end that is of the black matrix 921 and that is close to the second light transmission part 61, so that the second transition part 62 forms a step structure. A spacing between the second light transmission part 61 and an end that is of the flat layer 93 and that is close to the second light transmission part 61 is less than a spacing between the second light transmission part 61 and the end that is of the black matrix 921 and that is close to the second light transmission part 61, so that a part of a surface at the end that is of the black matrix 921 and that is close to the second light transmission part 61 is exposed, to form the stepped surface 622.

In this embodiment, the second light transmission part 61 is a via, and a part that is of the second alignment layer 5 and that is located in the light transmission region 601 is formed on the second substrate 7. Therefore, a transmittance of the light transmission region 601 is higher. The second transition part 62 forms the step structure, the step structure can enable a transition of a height difference between the second substrate 7 and the second display part 63, and the stepped surface 622 of the second transition part 62 can bear the second alignment layer 5, thereby reducing a risk that the second alignment layer 5 accumulates at an edge of a part that is of the second substrate 7 and that is located in the light transmission region 601, and effectively resolving a problem such as display mura or heterochromatic display in the light transmission region 601 of the liquid crystal display panel 600 due to accumulation of the alignment layer, so that the liquid crystal display panel 600 has comparatively high display quality.

The first display part 23 can be configured to control a deflection direction of a liquid crystal that is of the liquid crystal layer 4 and that is located in the display region 603, and the second display part 63 can filter light. Therefore, when the first display part 23, the liquid crystal layer 4, and the second display part 63 cooperate with each other, the display region 603 can implement display.

The device array layer 91 is manufactured on the first substrate 1, and the first film group 2 and the first substrate 1 jointly form an array substrate. The color film layer 92 is manufactured on the second substrate 7, and the second film group 6 and the second substrate 7 jointly form a color film substrate. During manufacturing of the liquid crystal display panel 600, the array substrate and the color film substrate are first formed separately, then the array substrate and the color film substrate are meshed together, and then a liquid crystal is filled between the array substrate and the color film substrate to form the liquid crystal layer 4.

When the thin film transistors 90 in the device array layer 91 are of the foregoing bottom gate structure, the first film group 2 may further include a common electrode layer. The common electrode layer is made of a transparent conducting material.

Optionally, referring to FIG. 13, the liquid crystal display panel 600 further includes a support assembly 41. The support assembly 41 is located between the first film group 2 and the second film group 6, and penetrates the liquid crystal layer 4 in a direction from the first substrate 1 to the second substrate 7, to maintain a spacing between the first substrate 1 and the second substrate 7.

In this application, the support assembly 41 is configured to maintain the spacing (also referred to as a meshing gap) between the second substrate 7 and the first substrate 1, so that the liquid crystal display panel 600 is not easily deformed in a manufacturing or use process, thereby ensuring display quality of the liquid crystal display panel 600.

The support assembly 41 includes a plurality of first support columns 411. The plurality of first support columns 411 are arranged away from the light transmission region 601. The plurality of first support columns 411 are spaced from each other. The plurality of first support columns 411 are arranged by directly facing the black matrix 921. In other words, projections of the plurality of first support columns 411 on the second substrate 7 are covered by a projection of the black matrix 921 on the second substrate 7. The plurality of first support columns 411 may be made of a transparent material or an opaque material.

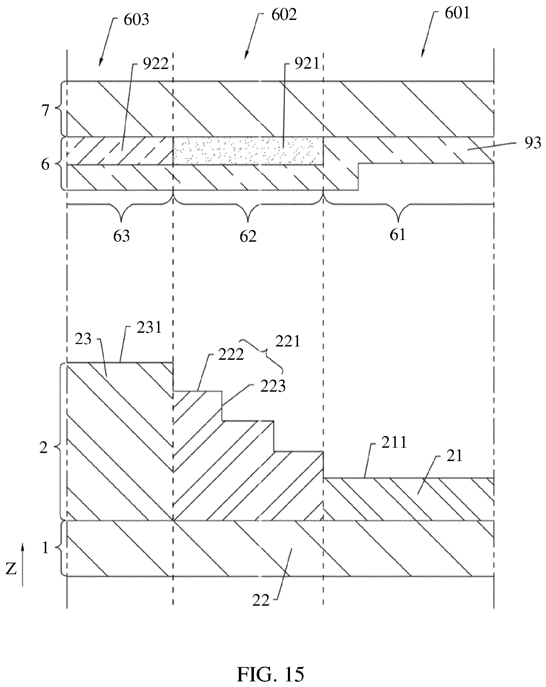

Refer to both FIG. 14 and FIG. 15. FIG. 14 is a schematic structural diagram of the liquid crystal display panel 600 shown in FIG. 3 according to a second embodiment. FIG. 15 is a schematic diagram of a partial structure of the liquid crystal display panel 600 shown in FIG. 14. Most technical solution content in this embodiment is the same as that in the foregoing embodiments, and is not described in detail again.

The second film group 6 includes a color film layer 92 and a flat layer 93. The color film layer 92 is located between the second substrate 7 and the flat layer 93. The color film layer 92 includes a black matrix 921 and a plurality of color stoppers 922 alternately disposed with the black matrix 921. In this embodiment, the black matrix 921 is integrated in the color film layer 92, and the black matrix 921 and the plurality of color stoppers 922 share a part of thickness space of the liquid crystal display panel 600.

The second display part 63 includes the plurality of color stoppers 922, a part of the black matrix 921, and a part of the flat layer 93 that are arranged in the display region 603. The second transition part 62 includes a part of the black matrix 921 and a part of the flat layer 93 that are arranged in the light shielding region 602.

A main difference between this embodiment and the foregoing embodiment is as follows:
The second light transmission part 61 includes a part that is of the flat layer 93 and that is arranged in the light transmission region 601. In other words, the flat layer 93 continuously covers the display region 603, the light shielding region 602, and the light transmission region 601.

In this embodiment, because the second light transmission part 61 includes a part of the flat layer 93, a height difference between the second light transmission part 61 and the second display part 63 is comparatively small, or thicknesses of the second light transmission part 61 and the second display part 63 can be even the same, so that a risk that the second alignment layer 5 accumulates on the second light transmission part 61 is comparatively low.

A thickness of the part that is of the flat layer 93 and that is located in the light transmission region 601 may be roughly the same as a thickness of a part that is of the flat layer 93 and that is located in the display region 603. In this case, the height difference between the second light transmission part 61 and the second display part 63 is comparatively small.

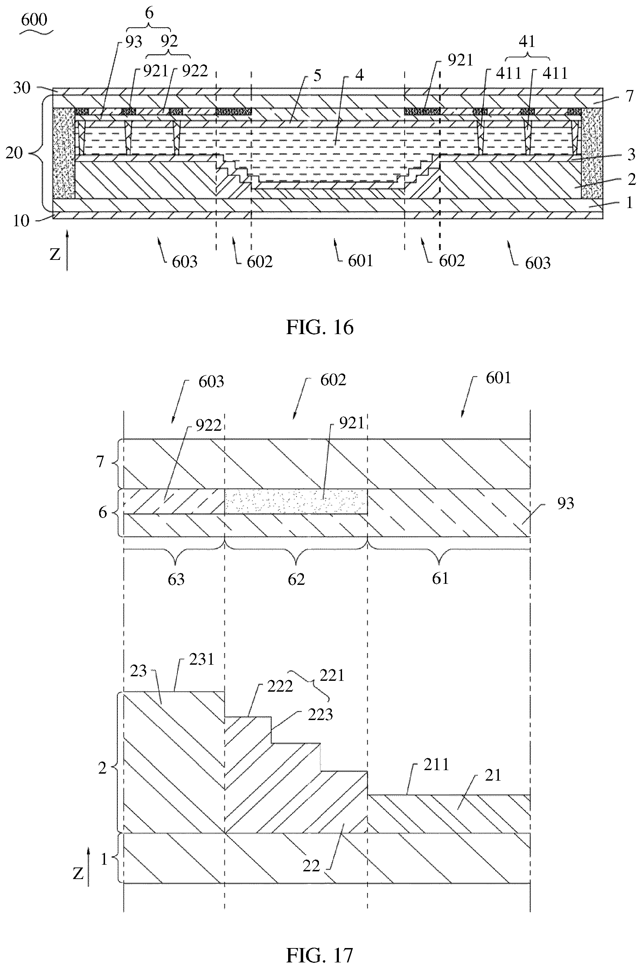

Refer to both FIG. 16 and FIG. 17. FIG. 16 is a schematic structural diagram of the liquid crystal display panel 600 shown in FIG. 3 according to a third embodiment. FIG. 17 is a schematic diagram of a partial structure of the liquid crystal display panel 600 shown in FIG. 16. Most technical solution content in this embodiment is the same as that in the foregoing embodiments, and is not described in detail again.

The second display part 63 includes the plurality of color stoppers 922, a part of the black matrix 921, and a part of the flat layer 93 that are arranged in the display region 603. The second transition part 62 includes a part of the black matrix 921 and a part of the flat layer 93 that are arranged in the light shielding region 602. The second light transmission part 61 includes a part that is of the flat layer 93 and that is arranged in the light transmission region 601.

A main difference between this embodiment and the foregoing embodiment is as follows: A surface 931 that is of the flat layer 93 and that is away from the second substrate 7 is a flat surface. In this case, thicknesses of the second light transmission part 61, the second transition part 62, and the second display part 63 are the same, and the flat layer 93 can provide a flat formation surface. Therefore, the second alignment layer 5 can form a flat film layer, and the second alignment layer 5 does not accumulate on the second light transmission part 61, so that formation quality of the second alignment layer 5 is higher.

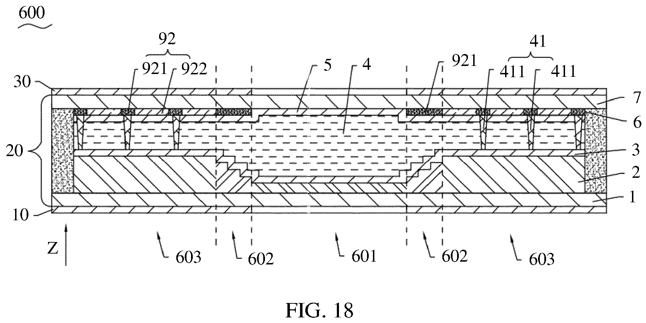

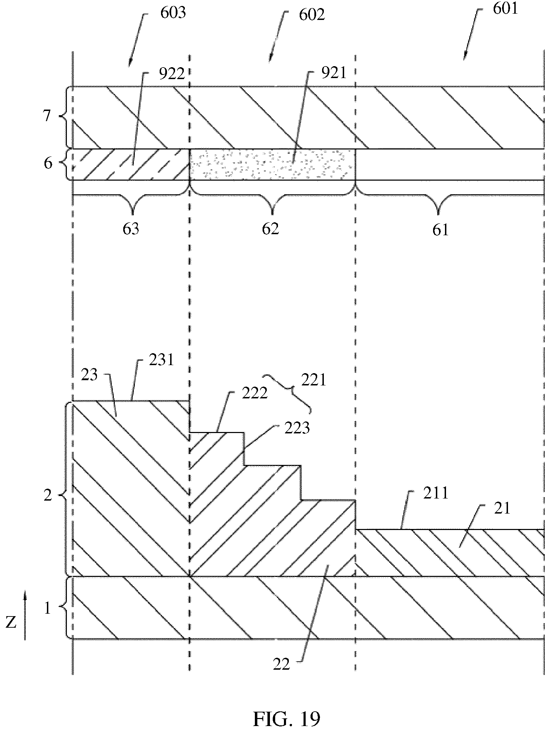

Refer to both FIG. 18 and FIG. 19. FIG. 18 is a schematic structural diagram of the liquid crystal display panel 600 shown in FIG. 3 according to a fourth embodiment. FIG. 19 is a schematic diagram of a partial structure of the liquid crystal display panel 600 shown in FIG. 18. Most technical solution content in this embodiment is the same as that in the foregoing embodiments, and is not described in detail again.

The second film group 6 includes a color film layer 92. The color film layer 92 is configured to allow light within a specific band range to pass. The color film layer 92 includes a black matrix 921 and a plurality of color stoppers 922 alternately disposed with the black matrix 921. In this embodiment, the black matrix 921 is integrated in the color film layer 92, and the black matrix 921 and the plurality of color stoppers 922 share a part of thickness space of the liquid crystal display panel 600.

The second display part 63 includes the plurality of color stoppers 922 and a part of the black matrix 921 that are arranged in the display region 603. The second transition part 62 includes a part that is of the black matrix 921 and that is arranged in the light shielding region 602. In this case, the second transition part 62 can shield visible light. The second light transmission part 61 is a via. In other words, the color film layer 92 is disposed in the light transmission region 601 in a hollow-out manner.

In this embodiment, the second light transmission part 61 is a via, and a part that is of the second alignment layer 5 and that is located in the light transmission region 601 is formed on the second substrate 7. Therefore, a transmittance of the light transmission region 601 is higher.

The first film group 2 includes a color film layer 92 and a device array layer 91. The device array layer 91 is located between the color film layer 92 and the first substrate 1. The color film layer 92 is configured to allow light within a specific band range to pass. The color film layer 92 includes a plurality of color stoppers 922. For a layer structure of the device array layer 91 in this embodiment, refer to the foregoing embodiments (refer to FIG. 11 and FIG. 12). The device array layer 91 includes a plurality of light transmission film layers 901 and a plurality of light shielding film layers 902 that are disposed in a laminated manner. The plurality of light transmission film layers 901 allow visible light to pass. One or more of the plurality of light transmission film layers 901 are patterned film layers. The plurality of light shielding film layers 902 can shield visible light. The plurality of light shielding film layers 902 are patterned film layers.

The first display part 23 includes the plurality of color stoppers 922, parts that are of the plurality of light shielding film layers 902 and that are located in the display region 603, and parts that are of the plurality of light transmission film layers 901 and that are located in the display region 603. The device array layer 91 forms a plurality of thin film transistors 90 in the display region 603. In other words, the parts that are of the plurality of light shielding film layers 902 and that are included in the first display part 23, and the parts that are of the plurality of light transmission film layers 901 and that are included in the first display part 23 jointly form the plurality of thin film transistors 90. The plurality of thin film transistors 90 are disposed in an array. The first light transmission part 21 includes a part that is of one or more light transmission film layers 901 and that is located in the light transmission region 601.

In this embodiment, the first display part 23 can be configured to control a deflection direction of a liquid crystal that is of the liquid crystal layer 4 and that is located in the display region 603, and can also be configured to filter light. Therefore, when the first display part 23, the liquid crystal layer 4, and the second display part 63 cooperate with each other, the display region 603 can implement display.

The device array layer 91 and the color film layer 92 are successively formed on the first substrate 1, to form a color filter on array (color filter on array, COA) substrate. The second substrate 7 and the second film group 6 formed on the second substrate 7 jointly form a meshing substrate. During manufacturing of the liquid crystal display panel 600, the color filter on array substrate and the meshing substrate are first formed separately, then the color filter on array substrate and the meshing substrate are meshed together, and then a liquid crystal is filled between the color filter on array substrate and the meshing substrate to form the liquid crystal layer 4. Because the color film layer 92 is formed on the device array layer 91, a problem that the liquid crystal display panel 600 has a high requirement on alignment can be resolved, and an aperture opening ratio of the liquid crystal display panel 600 can also be increased.

In this embodiment, because the first light transmission part 21 includes the part that is of the one or more light transmission film layers 901 and that is located in the light transmission region 601, a difference between the thickness of the first light transmission part 21 and the thickness of the first display part 23 is comparatively small, and a thickness of a part that is of the liquid crystal layer 4 and that is in the light transmission region 601 is close to a thickness of a part that is of the liquid crystal layer 4 and that is in the display region 603, to reduce a risk that a display anomaly (for example, a Newton's ring) occurs in the display region 603 around the light transmission region 601 due to an excessively large difference between layer structures, and improve display quality of the liquid crystal display 400. In addition, a quantity of stepped surfaces 222 of the first transition part 22 and/or an area of the stepped surface 222 of the first transition part 22 can be reduced, and difficulty in processing the first transition part 22 can be reduced.

A film layer of the first light transmission part 21 and some film layers of the first display part 23 are film layers at a same layer, and can be manufactured in one formation process. Therefore, a formation procedure of the first light transmission part 21 can be integrated in a formation procedure of the first display part 23, thereby reducing difficulty in processing the device array layer 91, and improving efficiency of processing the device array layer 91.

The first transition part 22 includes a part that is of one or more light transmission film layers 901 and that is in the light shielding region 602. In this case, the first transition part 22 allows visible light to pass. Alternatively, the first transition part 22 includes a part that is of one or more light transmission film layers 901 and that is in the light shielding region 602, and a part that is of one or more light shielding film layers 902 and that is in the light shielding region 602. In this case, the first transition part 22 can shield visible light.

In this embodiment, the first transition part 22 may implement the step structure based on a variation of a quantity of film layers at different locations. For example, in a direction from the first display part 23 to the first light transmission part 21, a quantity of film layers at different locations in the first transition part 22 progressively decreases, so that a thickness progressively decreases, to form the step structure. Alternatively, the first transition part 22 may form the step structure based on a variation of a thickness of a film layer that is of the first transition part 22 and that is away from a top insulator layer of the first substrate 1.

The first film group 2 further includes a second flat layer 94. The second flat layer 94 is located on a side that is of the color film layer 92 and that is away from the first substrate 1, and covers the display region 603. A side that is of the second flat layer 94 and that is away from the color film layer 92 can provide a flat formation surface, so that the first alignment layer 3 can be evenly applied on the first display part 23, and display quality of the liquid crystal display panel 600 is comparatively high.

The second film group 6 includes a black matrix 921 and a flat layer 93. The black matrix 921 is located between the second substrate 7 and the flat layer 93. In this embodiment, the black matrix 921 is independent of the color film layer 92. The second film group 6 and the second substrate 7 form a meshing substrate of a color filter on array substrate. The second display part 63 includes a part of the black matrix 921 and a part of the flat layer 93 that are arranged in the display region 603. The flat layer 93 can provide a flat formation surface in the display region 603, so that the second alignment layer 5 can be evenly applied on the second display part 63. The second transition part 62 includes a part of the black matrix 921 and a part of the flat layer 93 that are arranged in the light shielding region 602.

The second light transmission part 61 is a via. In other words, the black matrix 921 and the flat layer 93 are disposed in the light transmission region 601 in a hollow-out manner. A transmittance of the light transmission region 601 is comparatively high. In the second transition part 62, a stepped surface 622 may be formed at an end that is of the black matrix 921 and that is close to the second light transmission part 61, so that the second transition part 62 forms a step structure. A spacing between the second light transmission part 61 and an end that is of the flat layer 93 and that is close to the second light transmission part 61 is greater than a spacing between the second light transmission part 61 and the end that is of the black matrix 921 and that is close to the second light transmission part 61, so that a part of a surface at the end that is of the black matrix 921 and that is close to the second light transmission part 61 is exposed, to form the stepped surface 622.

When the thin film transistors 90 in the device array layer 91 are of the foregoing bottom gate structure, the first film group 2 may further include a common electrode layer. The common electrode layer is made of a transparent conducting material.

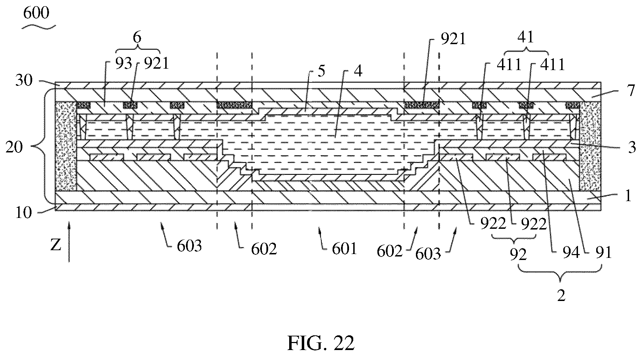

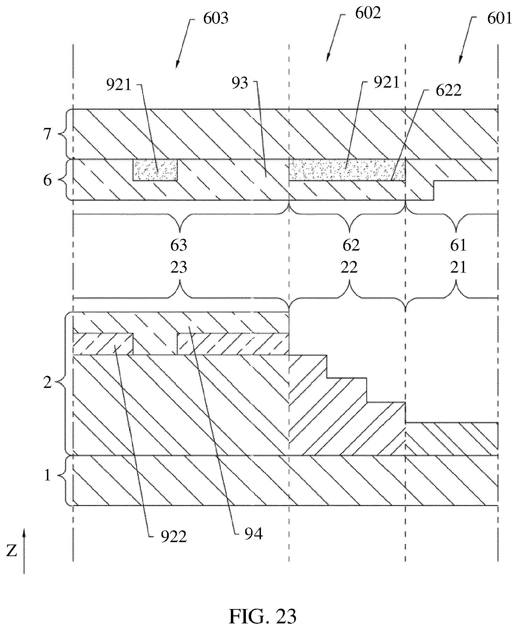

Refer to both FIG. 22 and FIG. 23. FIG. 22 is a schematic structural diagram of the liquid crystal display panel 600 shown in FIG. 3 according to a sixth embodiment. FIG. 23 is a schematic diagram of a partial structure of the liquid crystal display panel 600 shown in FIG. 22. Most technical solution content in this embodiment is the same as that in the foregoing embodiments, and is not described in detail again.

The second film group 6 includes a black matrix 921 and a flat layer 93. The black matrix 921 is located between the second substrate 7 and the flat layer 93. The second film group 6 and the second substrate 7 form a meshing substrate of a color filter on array substrate. The second display part 63 includes a part of the black matrix 921 and a part of the flat layer 93 that are arranged in the display region 603. The flat layer 93 can provide a flat formation surface in the display region 603, so that the second alignment layer 5 can be evenly applied on the second display part 63. The second transition part 62 includes a part of the black matrix 921 and a part of the flat layer 93 that are arranged in the light shielding region 602.

A main difference between this embodiment and the foregoing embodiment is as follows: The second light transmission part 61 includes a part that is of the flat layer 93 and that is arranged in the light transmission region 601. In this case, a height difference between the second light transmission part 61 and the second display part 63 is comparatively small, or thicknesses of the second light transmission part 61 and the second display part 63 can be even the same, so that a risk that the second alignment layer 5 accumulates on the second light transmission part 61 is comparatively low.

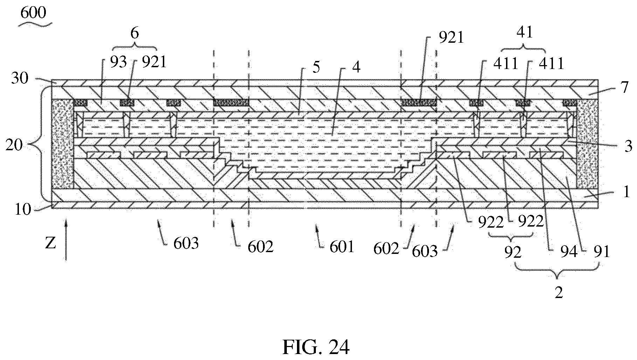

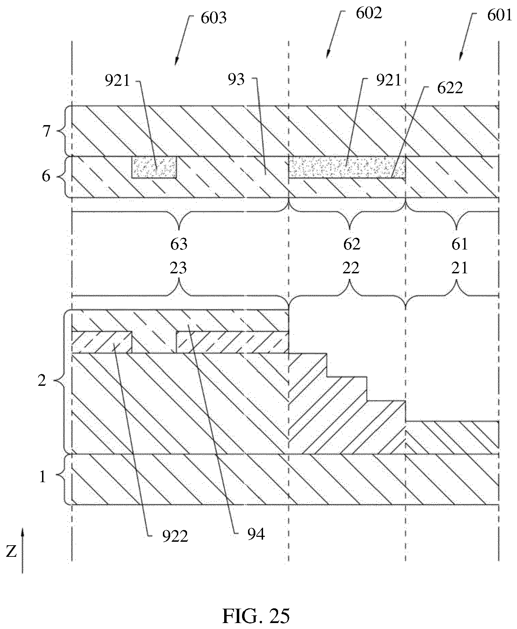

Refer to both FIG. 24 and FIG. 25. FIG. 24 is a schematic structural diagram of the liquid crystal display panel 600 shown in FIG. 3 according to a seventh embodiment. FIG. 25 is a schematic diagram of a partial structure of the liquid crystal display panel 600 shown in FIG. 24. Most technical solution content in this embodiment is the same as that in the foregoing embodiments, and is not described in detail again.

The second film group 6 includes a black matrix 921 and a flat layer 93. The black matrix 921 is located between the second substrate 7 and the flat layer 93. In this embodiment, the black matrix 921 is independent of the color film layer 92. The second film group 6 and the second substrate 7 form a meshing substrate of a color filter on array substrate. The second display part 63 includes a part of the black matrix 921 and a part of the flat layer 93 that are arranged in the display region 603. The second transition part 62 includes a part of the black matrix 921 and a part of the flat layer 93 that are arranged in the light shielding region 602. The second light transmission part 61 includes a part that is of the flat layer 93 and that is arranged in the light transmission region 601.

A main difference between this embodiment and the foregoing embodiment is as follows: A surface 931 that is of the flat layer 93 and that is away from the second substrate 7 is a flat surface.

In this embodiment, thicknesses of the second light transmission part 61, the second transition part 62, and the second display part 63 are the same, and the flat layer 93 can provide a continuous flat formation surface in the light transmission region 601, the light shielding region 602, and the display region 603. This helps reduce difficulty in manufacturing the second alignment layer 5. Therefore, the second alignment layer 5 can be more evenly applied on the second display part 63, the second transition part 62, and the second light transmission part 61, a risk that the second alignment layer 5 accumulates is comparatively low, and the liquid crystal display panel 600 has higher display quality.

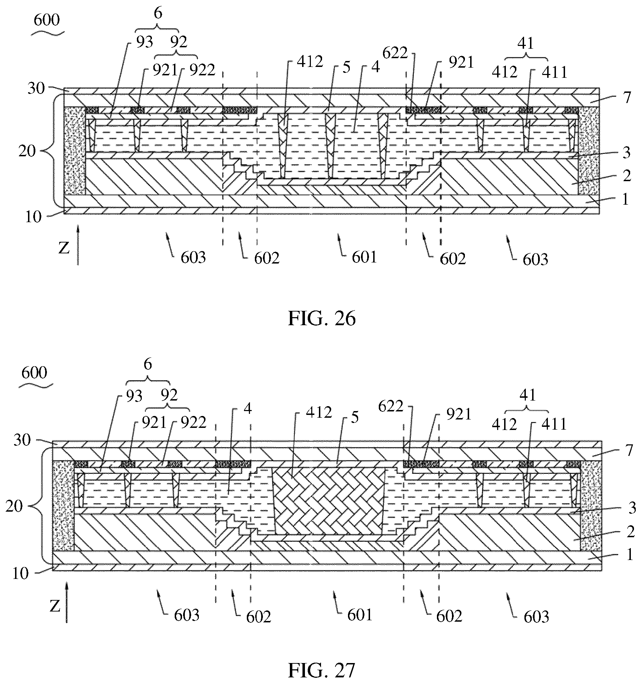

FIG. 26 is a schematic structural diagram of the liquid crystal display panel 600 shown in FIG. 3 according to an eighth embodiment. Most technical solution content in this embodiment is the same as that in the foregoing embodiments, and is not described in detail again.

The liquid crystal display panel 600 includes a support assembly 41. The support assembly 41 is located between the first film group 2 and the second film group 6, and penetrates the liquid crystal layer 4 in a direction from the first substrate 1 to the second substrate 7, to maintain a spacing between the first substrate 1 and the second substrate 7. The support assembly 41 includes a plurality of first support columns 411. The plurality of first support columns 411 are arranged away from the light transmission region 601.

A main difference between this embodiment and the foregoing embodiment is as follows: The support assembly 41 further includes a second support column 412, and the second support column 412 is arranged in the light transmission region 601. The second support column 412 is made of a transparent material. In this embodiment, the second support column 412 supports the second substrate 7 and the first substrate 1 that are located in the light transmission region 601, so that the liquid crystal display panel 600 has a same meshing gap in the light transmission region 601 and the display region 603, to avoid a display anomaly in the display region 603 around the light transmission region 601. Therefore, the liquid crystal display 400 has comparatively high display quality.

There are a plurality of second support columns 412. The plurality of second support columns 412 are arranged in the light transmission region 601 and are spaced from each other. In this embodiment, the plurality of second support columns 412 may be arranged at roughly uniform spacings, so that the entire light transmission region 601 of the liquid crystal display panel 600 has a comparatively uniform meshing gap.

When a quantity of second support columns 412 is designed, a support requirement and a light transmission requirement need to be balanced, to have sufficient second support columns 412 for maintaining the meshing gap while preventing disposing too many second support columns 412 from causing an excessively low transmittance of the light transmission region 601.

In a direction Z from the first substrate 1 to the second substrate 7, a height of the second support column 412 is greater than that of the first support column 411. The height of the second support column 412 is designed to properly support the second substrate 7 and the first substrate 1. In this case, for a shape of the second support column 412, refer to a design of the first support column 411. The second support column 412 and the first support column 411 may be roughly in a shape of a truncated cone. The second support column 412 and the first support column 411 may be formed in one procedure, or may be formed in two procedures.

FIG. 27 is a schematic structural diagram of the liquid crystal display panel 600 shown in FIG. 3 according to a ninth embodiment. Most technical solution content in this embodiment is the same as that in the foregoing embodiments, and is not described in detail again.

The liquid crystal display panel 600 includes a support assembly 41. The support assembly 41 is located between the first film group 2 and the second film group 6, and penetrates the liquid crystal layer 4 in a direction from the first substrate 1 to the second substrate 7, to maintain a spacing between the first substrate 1 and the second substrate 7. The support assembly 41 includes a plurality of first support columns 411. The plurality of first support columns 411 are arranged away from the light transmission region 601. The support assembly 41 further includes a second support column 412, and the second support column 412 is arranged in the light transmission region 601.

A main difference between this embodiment and the foregoing embodiment is as follows: There is one second support column 412. An area of an end face that is of the second support column 412 and that faces the first substrate 1 is greater than an area of end face that is of the first support column 411 and that faces the first substrate 1. An area of an end face that is of the second support column 412 and that faces the second substrate 7 is greater than an area of an end face that is of the first support column 411 and that faces the second substrate 7.

In this embodiment, the second support column 412 can provide a larger support area, so that the support assembly 41 can stably support the light transmission region 601 when there is one second support column 412.

The second support column 412 may be in a shape of a truncated cone, and two end faces of the second support column 412 are in a circular shape. In this case, the two end faces of the second support column 412 may cover the light transmission region 601 as much as possible. For example, the second support column 412 is formed on the second substrate 7, and an end face that is of the second support column 412 and that faces the second substrate 7 covers the light transmission region 601. In this case, an end face that is of the second support column 412 and that faces the first substrate 1 may cover the light transmission region 601 or cover a part of the light transmission region 601. Because the second support column 412 occupies much space or even all space of the liquid crystal layer 4 in the light transmission region 601, the liquid crystal layer 4 has a few liquid crystals or even no liquid crystal in the liquid crystal region.

In this embodiment, the second support column 412 may be made of a high-transmittance material, to increase a transmittance of the light transmission region 601. For example, a transmittance of a material of the second support column 412 may be higher than that of a liquid crystal material.

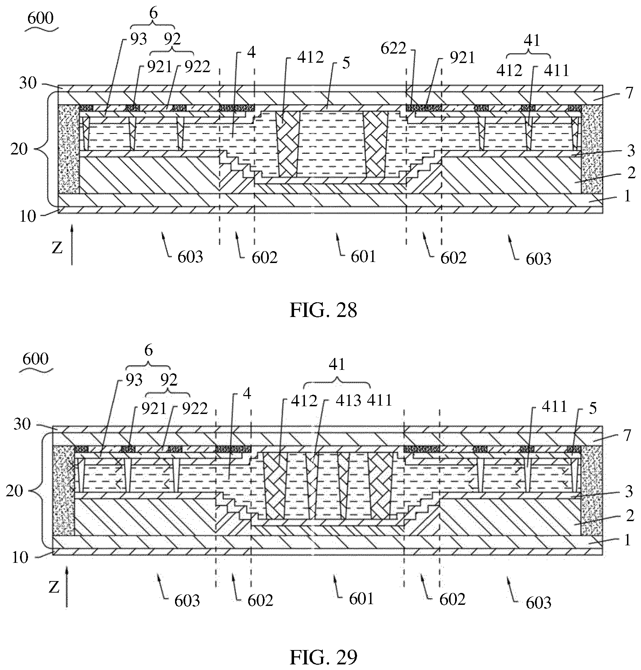

FIG. 28 is a schematic structural diagram of the liquid crystal display panel 600 shown in FIG. 3 according to a tenth embodiment. Most technical solution content in this embodiment is the same as that in the foregoing embodiments, and is not described in detail again.

The liquid crystal display panel 600 includes a support assembly 41. The support assembly 41 is located between the first film group 2 and the second film group 6, and penetrates the liquid crystal layer 4 in a direction from the first substrate 1 to the second substrate 7, to maintain a spacing between the first substrate 1 and the second substrate 7. The support assembly 41 includes a plurality of first support columns 411. The plurality of first support columns 411 are arranged away from the light transmission region 601. The support assembly 41 further includes a second support column 412, and the second support column 412 is arranged in the light transmission region 601. There is one second support column 412. An area of an end face that is of the second support column 412 and that faces the first substrate 1 is greater than an area of end face that is of the first support column 411 and that faces the first substrate 1.

A main difference between this embodiment and the foregoing embodiment is as follows: The end face that is of the second support column 412 and that faces the first substrate 1 is in an annular shape. In this case, the second support column 412 has an inner annular surface and an outer annular surface that are disposed opposite to each other. A liquid crystal is arranged in a space encircled by the inner annular surface. The second support column 412 with the annular end face has comparatively high support strength.

FIG. 29 is a schematic structural diagram of the liquid crystal display panel 600 shown in FIG. 3 according to an eleventh embodiment. Most technical solution content in this embodiment is the same as that in the foregoing embodiments, and is not described in detail again.

The liquid crystal display panel 600 includes a support assembly 41. The support assembly 41 is located between the first film group 2 and the second film group 6, and penetrates the liquid crystal layer 4 in a direction from the first substrate 1 to the second substrate 7, to maintain a spacing between the first substrate 1 and the second substrate 7. The support assembly 41 includes a plurality of first support columns 411. The plurality of first support columns 411 are arranged away from the light transmission region 601. The support assembly 41 further includes a second support column 412, and the second support column 412 is arranged in the light transmission region 601. There is one second support column 412. An area of an end face that is of the second support column 412 and that faces the first substrate 1 is greater than an area of end face that is of the first support column 411 and that faces the first substrate 1. The end face that is of the second support column 412 and that faces the first substrate 1 is in an annular shape.

A main difference between this embodiment and the foregoing embodiment is as follows: The support assembly 41 further includes one or more third support columns 413, and the second support column 412 is disposed around the one or more third support columns 413. In this embodiment, the one or more third support columns 413 are disposed, so that the one or more third support columns 413 and the second support column 412 cooperate with each other to jointly support the second substrate 7 and the first substrate 1. This can improve reliability of supporting, by the support assembly 41, a part that is of the liquid crystal display panel 600 and that is in the light transmission region 601.

A plurality of third support columns 413 may be arranged in an array. The second support column 412 is arranged in the light transmission region 601. The second support column 412 and the third support column 413 have a same height in a direction Z from the first substrate 1 to the second substrate 7.

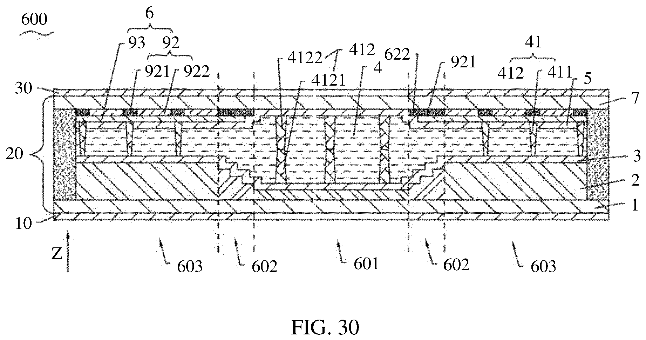

FIG. 30 is a schematic structural diagram of the liquid crystal display panel 600 shown in FIG. 3 according to a twelfth embodiment. Most technical solution content in this embodiment is the same as that in the foregoing embodiments, and is not described in detail again.

The liquid crystal display panel 600 includes a support assembly 41. The support assembly 41 is located between the first film group 2 and the second film group 6, and penetrates the liquid crystal layer 4 in a direction from the first substrate 1 to the second substrate 7, to maintain a spacing between the first substrate 1 and the second substrate 7. The support assembly 41 includes a plurality of first support columns 411. The plurality of first support columns 411 are arranged away from the light transmission region 601. The support assembly 41 further includes a second support column 412, and the second support column 412 is arranged in the light transmission region 601.

A main difference between this embodiment and the foregoing embodiment is as follows:
The second support column 412 includes a first support block 4121 and a second support block 4122. The first support block 4121 and the second support block 4122 are arranged in a direction Z from the first substrate 1 to the second substrate 7, and abut against each other. In this case, one of the first support block 4121 and the second support block 4122 is formed on the second substrate 7, and the other is formed on the first substrate 1. In the direction Z from the first substrate 1 to the second substrate 7, a sum of heights of the first support block 4121 and the second support block 4122 is equal to a height of the second support column 412. In this embodiment, one second support column 412 is divided into the first support block 4121 and the second support block 4122. This helps reduce difficulty in forming the second support column 412, so that formation quality of the second support column 412 is comparatively high.

An area of an end face that is of the first support block 4121 and that faces the first substrate 1 is the same as an area of an end face that is of the second support block 4122 and that faces the second substrate 7. In another embodiment, the area of the end face that is of the first support block 4121 and that faces the first substrate 1 may be alternatively greater than or less than the area of the end face that is of the second support block 4122 and that faces the second substrate 7, so that the first support block 4121 and the second support block 4122 abut against each other more firmly.

An area of an end face that is of the first support block 4121 and that faces the second substrate 7 is the same as an area of an end face that is of the second support block 4122 and that faces the first substrate 1. A height of the first support block 4121 may be the same as or different from that of the second support block 4122.

The manner of splitting the second support column 412 into the first support block 4121 and the second support block 4122 in this embodiment may also be applied to the structures shown in FIG. 26 to FIG. 29.

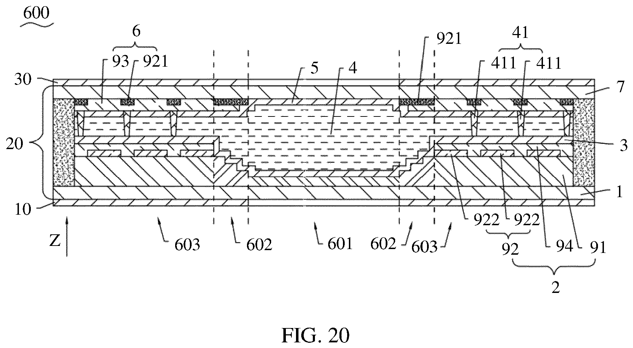

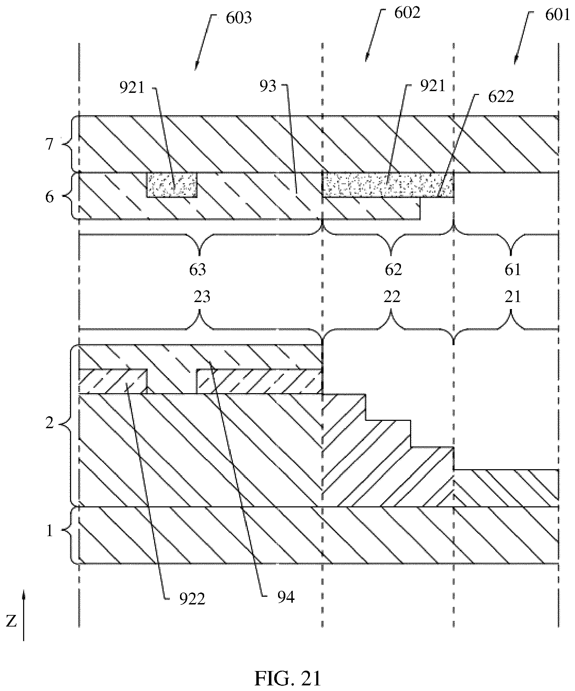

In this application, the liquid crystal display panel 600 of various structures shown in FIG. 6 to FIG. 30 may be applied to the structures shown in FIG. 4 and FIG. 5.

## Claims

1. A liquid crystal display panel (600), wherein the liquid crystal display panel (600) comprises a light transmission region (601), a light shielding region (602) surrounding the light transmission region (601), and a display region (603) surrounding the light shielding region (602); and
the liquid crystal display panel (600) comprises a first substrate (1), a first film group (2), a first alignment layer (3), a liquid crystal layer (4), a second alignment layer (5), a second film group (6), and a second substrate (7) that are successively disposed in a laminated manner;
both the first substrate (1) and the second substrate (7) are made of a transparent material, and continuously cover the light transmission region (601), the light shielding region (602), and the display region (603);
the first alignment layer (3), the liquid crystal layer (4), and the second alignment layer (5) are all located in the light transmission region (601), the light shielding region (602), and the display region (603);
the first film group (2) comprises a first display part (23) located in the display region (603), a first transition part (22) located in the light shielding region (602), and a first light transmission part (21) located in the light transmission region (601); the second film group (6) comprises a second display part (63) located in the display region (603), a second transition part (62) located in the light shielding region (602), and a second light transmission part (61) located in the light transmission region (601); the first display part (23) and the second display part (63) cooperate with each other to display an image; both the first light transmission part (21) and the second light transmission part (61) allow visible light to pass; at least one of the first transition part (22) and the second transition part (62) can shield visible light; and
in a direction from the first substrate (1) to the second substrate (7), a thickness of the first display part (23) is greater than that of the first light transmission part (21), the first transition part (22) forms a step structure that connects the first display part (23) to the first light transmission part (21), and a top surface (221) that is of the first transition part (22) and that is away from the first substrate (1) comprises one or more stepped surfaces (222),
wherein the top surface (221) of the first transition part (22) further comprises a plurality of joint surfaces (223) that are spaced from each other, the stepped surface (222) is connected between two adjacent joint surfaces (223), and an included angle of 120° to 135° is formed between the stepped surface (222) and the joint surface (223) that are connected, wherein the step structure is configured to enable a gradual transition of a height difference between the first display part (23) and the first light transmission part (21) .

2. The liquid crystal display panel (600) according to claim 1, wherein the top surface (221) of the first transition part (22) further comprises a transition surface (224), the transition surface (224) is connected between the joint surface (223) and a top surface (211) that is of the first light transmission part (21) and that is away from the first substrate (1), and the transition surface (224) is flush with the top surface (211) of the first light transmission part (21),
wherein the joint surface is a joint surface closest to the first light transmission part among the plurality of joint surfaces.

3. The liquid crystal display panel (600) according to any one of claims 1 to 2, wherein the first film group (2) comprises a device array layer (91), and the device array layer (91) comprises a plurality of light transmission film layers (901) and a plurality of light shielding film layers (902) that are disposed in a laminated manner; the first display part (23) comprises parts that are of the plurality of light shielding film layers (902) and that are located in the display region (603), and parts that are of the plurality of light transmission film layers (901) and that are located in the display region (603); the device array layer (91) forms a plurality of thin film transistors in the display region (603); and the first light transmission part (21) comprises a part that is of one or more light transmission film layers (901) and that is located in the light transmission region (601),
wherein the parts that are of the plurality of light shielding film layers (902) and that are included in the first display part, and the parts that are of the plurality of light transmission film layers (901) and that are included in the first display part jointly form the plurality of thin film transistors, and
wherein the plurality of thin film transistors are disposed in an array.

4. The liquid crystal display panel (600) according to claim 3, wherein the first transition part (22) comprises a part that is of one or more light transmission film layers (901) and that is in the light shielding region (602); or
the first transition part (22) comprises a part that is of one or more light transmission film layers (901) and that is in the light shielding region (602), and a part that is of one or more light shielding film layers (902) and that is in the light shielding region (602).

5. The liquid crystal display panel (600) according to claim 3 or 4, wherein the second film group (6) comprises a color film layer and a flat layer (93); the color film layer is located between the second substrate (7) and the flat layer (93), and the color film layer comprises a black matrix (921) and a plurality of color stoppers (922) alternately disposed with the black matrix (921); the second display part (63) comprises the plurality of color stoppers (922), a part of the black matrix (921), and a part of the flat layer (93) that are arranged in the display region (603); the second light transmission part (61) is a via; the second transition part (62) comprises a part of the black matrix (921) and a part of the flat layer (93) that are arranged in the light shielding region (602); and
in the second transition part (62), a stepped surface (222) is formed at an end that is of the black matrix (921) and that is close to the second light transmission part (61), so that the second transition part (62) forms a step structure, wherein the second transmission part (61) being a via comprises the color film layer being disposed in the light transmission region in a hollow-out manner.

6. The liquid crystal display panel (600) according to claim 3 or 4, wherein the second film group (6) comprises a color film layer and a flat layer (93); the color film layer is located between the second substrate (7) and the flat layer (93), and the color film layer comprises a black matrix (921) and a plurality of color stoppers (922) alternately disposed with the black matrix (921); the second display part (63) comprises the plurality of color stoppers (922), a part of the black matrix (921), and a part of the flat layer (93) that are arranged in the display region (603); the second transition part (62) comprises a part of the black matrix (921) and a part of the flat layer (93) that are arranged in the light shielding region (602); and the second light transmission part (61) comprises a part that is of the flat layer (93) and that is arranged in the light transmission region (601).

7. The liquid crystal display panel (600) according to claim 6, wherein the surface that is of the flat layer (93) and that is away from the second substrate (7) is a flat surface.

8. The liquid crystal display panel (600) according to claim 3 or 4, wherein the second film group (6) comprises a color film layer; the color film layer comprises a black matrix (921) and a plurality of color stoppers (922) alternately disposed with the black matrix (921); the second display part (63) comprises the plurality of color stoppers (922) and a part of the black matrix (921) that are arranged in the display region (603); the second transition part (62) comprises a part that is of the black matrix (921) and that is arranged in the light shielding region (602); and the second light transmission part (61) is a via,
wherein the second transmission part (61) being a via comprises the color film layer being disposed in the light transmission region in a hollow-out manner.

9. The liquid crystal display panel (600) according to any one of claims 1 to 2, wherein the first film group (2) comprises a color film layer and a device array layer (91), the device array layer (91) is located between the color film layer and the first substrate (1), the color film layer comprises a plurality of color stoppers (922), and the device array layer (91) comprises a plurality of light transmission film layers (901) and a plurality of light shielding film layers (902) that are disposed in a laminated manner; the first display part (23) comprises the plurality of color stoppers (922), parts that are of the plurality of light shielding film layers (902) and that are located in the display region (603), and parts that are of the plurality of light transmission film layers (901) and that are located in the display region (603); the device array layer (91) forms a plurality of thin film transistors in the display region (603); and the first light transmission part (21) comprises a part that is of one or more light transmission film layers (901) and that is located in the light transmission region (601),
wherein the parts that are of the plurality of light shielding film layers (902) and that are included in the first display part, and the parts that are of the plurality of light transmission film layers (901) and that are included in the first display part jointly form the plurality of thin film transistors, and
wherein the plurality of thin film transistors are disposed in an array.

10. The liquid crystal display panel (600) according to claim 9, wherein the first transition part (22) comprises a part that is of one or more light transmission film layers (901) and that is in the light shielding region (602); or
the first transition part (22) comprises a part that is of one or more light transmission film layers (901) and that is in the light shielding region (602), and a part that is of one or more light shielding film layers (902) and that is in the light shielding region (602).

11. The liquid crystal display panel (600) according to claim 9 or 10, wherein the second film group (6) comprises a black matrix (921) and a flat layer (93), and the black matrix (921) is located between the second substrate (7) and the flat layer (93); the second display part (63) comprises a part of the black matrix (921) and a part of the flat layer (93) that are arranged in the display region (603); the second transition part (62) comprises a part of the black matrix (921) and a part of the flat layer (93) that are arranged in the light shielding region (602); and
the second light transmission part (61) is a via; or the second light transmission part (61) comprises a part that is of the flat layer (93) and that is arranged in the light transmission region (601),
wherein the second transmission part (61) being a via comprises the color film layer being disposed in the light transmission region in a hollow-out manner.

12. The liquid crystal display panel (600) according to claim 9 or 10, wherein the second film group (6) comprises a black matrix (921) and a flat layer (93), and the black matrix (921) is located between the second substrate (7) and the flat layer (93); the second display part (63) comprises a part of the black matrix (921) and a part of the flat layer (93) that are arranged in the display region (603); the second transition part (62) comprises a part of the black matrix (921) and a part of the flat layer (93) that are arranged in the light shielding region (602); the second light transmission part (61) comprises a part that is of the flat layer (93) and that is arranged in the light transmission region (601); and the surface that is of the flat layer (93) and that is away from the second substrate (7) is a flat surface.

13. The liquid crystal display panel (600) according to any one of claims 1 to 12, wherein the liquid crystal display panel further comprises a support assembly (41), and the support assembly (41) is located between the first film group (2) and the second film group (6), and penetrates the liquid crystal layer (4) in a direction from the first substrate (1) to the second substrate (7), to maintain a spacing between the first substrate (1) and the second substrate (7).

14. The liquid crystal display panel (600) according to claim 13, wherein the support assembly (41) comprises a plurality of first support columns (411), and the plurality of first support columns (411) are arranged away from the light transmission region (601), wherein said plurality of first support columns (411) penetrate the liquid crystal layer (4) in said direction from the first substrate (1) to the second substrate (7).

15. A liquid crystal display, comprising a backlight module and the liquid crystal display panel (600) according to any one of claims 1 to 14, wherein the backlight module is configured to provide a backlight source for the liquid crystal display panel, and the backlight module has a light transmission part that directly faces the light transmission region.

## Patentansprüche

1. Flüssigkristallanzeigefeld (600), wobei das Flüssigkristallanzeigefeld (600) einen Lichtdurchlässigkeitsbereich (601), einen Lichtabschirmungsbereich (602), der den Lichtdurchlässigkeitsbereich (601) umgibt, und einen Anzeigebereich (603) umfasst, der den Lichtabschirmungsbereich (602) umgibt; und
das Flüssigkristallanzeigefeld (600) ein erstes Substrat (1), eine erste Filmgruppe (2), eine erste Ausrichtungsschicht (3), eine Flüssigkristallschicht (4), eine zweite Ausrichtungsschicht (5), eine zweite Filmgruppe (6) und ein zweite Substrat (7) umfasst, die nacheinander laminiert angeordnet sind;
sowohl das erste Substrat (1) als auch das zweite Substrat (7) aus einem transparenten Material hergestellt sind und den Lichtdurchlässigkeitsbereich (601), den Lichtabschirmungsbereich (602) und den Anzeigebereich (603) durchgehend abdecken;
die erste Ausrichtungsschicht (3), die Flüssigkristallschicht (4) und die zweite Ausrichtungsschicht (5) sich allesamt in dem Lichtdurchlässigkeitsbereich (601), dem Lichtabschirmungsbereich (602) und dem Anzeigebereich (603) befinden;
die erste Filmgruppe (2) einen ersten Anzeigeteil (23), der sich in dem Anzeigebereich (603) befindet, einen ersten Übergangsteil (22), der sich in dem Lichtabschirmungsbereich (602) befindet, und einen ersten Lichtdurchlässigkeitsteil (21) umfasst, der sich in dem Lichtdurchlässigkeitsbereich (601) befindet; die zweite Filmgruppe (6) einen zweiten Anzeigeteil (63), der sich in dem Anzeigebereich (603) befindet, einen zweiten Übergangsteil (62), der sich in dem Lichtabschirmungsbereich (602) befindet, und einen zweiten Lichtdurchlässigkeitsteil (61) umfasst, der sich in dem Lichtdurchlässigkeitsbereich (601) befindet; der erste Anzeigeteil (23) und der zweite Anzeigeteil (63) miteinander zusammenwirken, um ein Bild anzuzeigen; sowohl der erste Lichtdurchlässigkeitsteil (21) als auch der zweite Lichtdurchlässigkeitsteil (61) sichtbares Licht durchlassen; mindestens einer von dem ersten Übergangsteil (22) und dem zweiten Übergangsteil (62) sichtbares Licht abschirmen kann; und
in einer Richtung von dem ersten Substrat (1) zu dem zweiten Substrat (7) eine Dicke des ersten Anzeigeteils (23) größer als die des ersten Lichtdurchlässigkeitsteils (21) ist, der erste Übergangsteil (22) eine Stufenstruktur bildet, die den ersten Anzeigeteil (23) mit dem ersten Lichtdurchlässigkeitsteil (21) verbindet, und eine obere Oberfläche (221), die von dem ersten Übergangsteil (22) ist und die von dem ersten Substrat (1) entfernt ist, eine oder mehrere abgestufte Oberflächen (222) umfasst,
wobei die obere Oberfläche (221) des ersten Übergangsteils (22) ferner eine Mehrzahl von Verbindungsflächen (223) umfasst, die voneinander beabstandet ist, die abgestufte Oberfläche (222) zwischen zwei benachbarten Verbindungsflächen (223) verbunden ist und zwischen der abgestuften Oberfläche (222) und der Verbindungsfläche (223), die verbunden sind, ein geschlossener Winkel von 120° bis 135° ausgebildet ist, wobei die Stufenstruktur dazu ausgelegt ist, einen allmählichen Übergang eines Höhenunterschieds zwischen dem ersten Anzeigeteil (23) und dem ersten Lichtdurchlässigkeitsteil (21) zu ermöglichen.

2. Flüssigkristallanzeigefeld (600) nach Anspruch 1, wobei die obere Oberfläche (221) des ersten Übergangsteils (22) ferner eine Übergangsfläche (224) umfasst, die Übergangsfläche (224) zwischen der Verbindungsfläche (223) und einer oberen Oberfläche (211) verbunden ist, die von dem ersten Lichtdurchlässigkeitsteil (21) ist und die von dem ersten Substrat (1) entfernt ist, und die Übergangsfläche (224) bündig mit der oberen Oberfläche (211) der ersten Lichtdurchlässigkeitsteils (21) abschließt, wobei die Verbindungsfläche eine Verbindungsfläche ist, die dem Lichtdurchlässigkeitsteil unter der Mehrzahl von Verbindungsflächen am nächsten ist.

3. Flüssigkristallanzeigefeld (600) nach einem der Ansprüche 1 bis 2, wobei die erste Filmgruppe (2) eine Vorrichtungsanordnungsschicht (91) umfasst und die Vorrichtungsanordnungsschicht (91) eine Mehrzahl von Lichtdurchlässigkeitsfilmschichten (901) und eine Mehrzahl von Lichtabschirmungsfilmschichten (902) umfasst, die laminiert angeordnet sind;
der erste Anzeigeteil (23) Teile, die von der Mehrzahl von Lichtabschirmungsfilmschichten (902) sind und die sich in dem Anzeigebereich (603) befinden, und Teile umfasst, die von der Mehrzahl von Lichtdurchlässigkeitsfilmschichten (901) sind und die sich in dem Anzeigebereich (603) befinden; die Vorrichtungsanordnungsschicht (91) eine Mehrzahl von Dünnfilmtransistoren in dem Anzeigebereich (603) bildet; und der erste Lichtdurchlässigkeitsteil (21) einen Teil umfasst, der von einer oder mehreren Lichtdurchlässigkeitsfilmschichten (901) ist und der sich in dem Lichtdurchlässigkeitsbereich (601) befindet,
wobei die Teile, die von der Mehrzahl von Lichtabschirmungsfilmschichten (902) sind und die in dem ersten Anzeigeteil umfasst sind, und die Teile, die von der Mehrzahl von Lichtdurchlässigkeitsfilmschichten (901) sind und die in dem ersten Anzeigeteil umfasst sind, zusammen die Mehrzahl von Dünnfilmtransistoren bilden; und
wobei die Mehrzahl von Dünnfilmtransistoren in einer Anordnung angeordnet ist.

4. Flüssigkristallanzeigefeld (600) nach Anspruch 3, wobei der erste Übergangsteil (22) einen Teil umfasst, der von einer oder mehreren Lichtdurchlässigkeitsfilmschichten (901) ist und der in dem Lichtabschirmungsbereich (602) ist; oder
der erste Übergangsteil (22) einen Teil, der von einer oder mehreren Lichtdurchlässigkeitsfilmschichten (901) ist und der in dem Lichtabschirmungsbereich (602) ist, und einen Teil umfasst, der von einer oder mehreren Lichtabschirmungsfilmschichten (902) ist und der in dem Lichtabschirmungsbereich (602) ist.

5. Flüssigkristallanzeigefeld (600) nach Anspruch 3 oder 4, wobei die zweite Filmgruppe (6) eine Farbfilmschicht und eine flache Schicht (93) umfasst; die Farbfilmschicht sich zwischen dem zweiten Substrat (7) und der flachen Schicht (93) befindet und die Farbfilmschicht eine Schwarzmatrix (921) und eine Mehrzahl von Farbstoppern (922) umfasst, die abwechselnd mit der Schwarzmatrix (921) angeordnet ist; der zweite Anzeigeteil (63) die Mehrzahl von Farbstoppern (922), einen Teil der Schwarzmatrix (921) und einen Teil der flachen Schicht (93) umfasst, die in dem Anzeigebereich (603) angeordnet sind; wobei der zweite Lichtdurchlässigteil (61) eine Durchkontaktierung ist; der zweite Übergangsteil (62) einen Teil der Schwarzmatrix (921) und einen Teil der flachen Schicht (93) umfasst, die in dem Lichtabschirmungsbereich (602) angeordnet sind; und
in dem zweiten Übergangsteil (62) eine abgestufte Oberfläche (222) an einem Ende ausgebildet ist, die von der Schwarzmatrix (921) ist und die nahe dem zweiten Lichtdurchlässigkeitsteil (61) ist, so dass der zweite Übergangsteil (62) eine Stufenstruktur bildet, wobei der zweite Durchlässigkeitsteil (61), der eine Durchkontaktierung ist, die Farbfilmschicht umfasst, die in dem Lichtdurchlässigkeitsbereich ausgehöhlt angeordnet ist.

6. Flüssigkristallanzeigefeld (600) nach Anspruch 3 oder 4, wobei die zweite Filmgruppe (6) eine Farbfilmschicht und eine flache Schicht (93) umfasst; die Farbfilmschicht sich zwischen dem zweiten Substrat (7) und der flachen Schicht (93) befindet und die Farbfilmschicht eine Schwarzmatrix (921) und eine Mehrzahl von Farbstoppern (922) umfasst, die abwechselnd mit der Schwarzmatrix (921) angeordnet ist; der zweite Anzeigeteil (63) die Mehrzahl von Farbstoppern (922), einen Teil der Schwarzmatrix (921) und einen Teil der flachen Schicht (93) umfasst, die in dem Anzeigebereich (603) angeordnet sind; der zweite Übergangsteil (62) einen Teil der Schwarzmatrix (921) und einen Teil der flachen Schicht (93) umfasst, die in dem Lichtabschirmungsbereich (602) angeordnet sind; und der zweite Lichtdurchlässigkeitsteil (61) einen Teil umfasst, der von der flachen Schicht (93) ist und der in dem Lichtdurchlässigkeitsbereich (601) angeordnet ist.

7. Flüssigkristallanzeigefeld (600) nach Anspruch 6, wobei die Oberfläche, die von der flachen Schicht (93) ist und die von dem zweiten Substrat (7) entfernt ist, eine flache Oberfläche ist.

8. Flüssigkristallanzeigefeld (600) nach Anspruch 3 oder 4, wobei die zweite Filmgruppe (6) eine Farbfilmschicht umfasst; die Farbfilmschicht eine Schwarzmatrix (921) und eine Mehrzahl von Farbstoppern (922) umfasst, die abwechselnd mit der Schwarzmatrix (921) angeordnet ist; der zweite Anzeigeteil (63) die Mehrzahl von Farbstoppern (922) und einen Teil der Schwarzmatrix (921) umfasst, die in dem Anzeigebereich (603) angeordnet sind; der zweite Übergangsteil (62) einen Teil umfasst, der von der Schwarzmatrix (921) ist und der in dem Lichtabschirmungsteil (602) angeordnet ist; und der zweite Lichtdurchlässigkeitsteil (61) eine Durchkontaktierung ist,
wobei der zweite Durchlässigkeitsteil (61), der eine Durchkontaktierung ist, die Farbfilmschicht umfasst, die in dem Lichtdurchlässigkeitsbereich ausgehöhlt angeordnet ist.

9. Flüssigkristallanzeigefeld (600) nach einem der Ansprüche 1 bis 2, wobei die erste Filmgruppe (2) eine Farbfilmschicht und eine Vorrichtungsanordnungsschicht (91) umfasst, die Vorrichtungsanordnungsschicht (91) sich zwischen der Farbfilmschicht und dem ersten Substrat (1) befindet, die Farbfilmschicht eine Mehrzahl von Farbstoppern (922) umfasst und die Vorrichtungsanordnungsschicht (91) eine Mehrzahl von Lichtdurchlässigkeitsfilmschichten (901) und eine Mehrzahl von Lichtabschirmungsfilmschichten (902) umfasst, die laminiert angeordnet sind;
der erste Anzeigeteil (23) die Mehrzahl von Farbstoppern (922), Teile, die von der Mehrzahl von Lichtabschirmungsfilmschichten (902) sind und die sich in dem Anzeigebereich (603) befinden, und Teile umfasst, die von der Mehrzahl von Lichtdurchlässigkeitsfilmschichten (901) sind und die sich in dem Anzeigebereich (603) befinden; die Vorrichtungsanordnungsschicht (91) eine Mehrzahl von Dünnfilmtransistoren in dem Anzeigebereich (603) bildet; und der erste Lichtdurchlässigkeitsteil (21) einen Teil umfasst, der von einer oder mehreren Lichtdurchlässigkeitsfilmschichten (901) ist und der sich in dem Lichtdurchlässigkeitsbereich (601) befindet,
wobei die Teile, die von der Mehrzahl von Lichtabschirmungsfilmschichten (902) sind und die in dem ersten Anzeigeteil umfasst sind, und die Teile, die von der Mehrzahl von Lichtdurchlässigkeitsfilmschichten (901) sind und die in dem ersten Anzeigeteil umfasst sind, zusammen die Mehrzahl von Dünnfilmtransistoren bilden; und
wobei die Mehrzahl von Dünnfilmtransistoren in einer Anordnung angeordnet ist.

10. Flüssigkristallanzeigefeld (600) nach Anspruch 9, wobei der erste Übergangsteil (22) einen Teil umfasst, der von einer oder mehreren Lichtdurchlässigkeitsfilmschichten (901) ist und der in dem Lichtabschirmungsbereich (602) ist; oder
der erste Übergangsteil (22) einen Teil, der von einer oder mehreren Lichtdurchlässigkeitsfilmschichten (901) ist und der in dem Lichtabschirmungsbereich (602) ist, und einen Teil umfasst, der von einer oder mehreren Lichtabschirmungsfilmschichten (902) ist und der in dem Lichtabschirmungsbereich (602) ist.

11. Flüssigkristallanzeigefeld (600) nach Anspruch 9 oder 10, wobei die zweite Filmgruppe (6) eine Schwarzmatrix (921) und eine flache Schicht (93) umfasst und die Schwarzmatrix (921) sich zwischen dem zweiten Substrat (7) und der flachen Schicht (93) befindet; der zweite Anzeigeteil (63) einen Teil der Schwarzmatrix (921) und einen Teil der flachen Schicht (93) umfasst, die in dem Anzeigebereich (603) angeordnet sind; der zweite Übergangsteil (62) einen Teil der Schwarzmatrix (921) und einen Teil der flachen Schicht (93) umfasst, die in dem Lichtabschirmungsbereich (602) angeordnet sind; und
der zweite Lichtdurchlässigkeitsteil (61) eine Durchkontaktierung ist; oder der zweite Lichtdurchlässigkeitsteil (61) einen Teil umfasst, der von der flachen Schicht (93) ist und der in dem Lichtdurchlässigkeitsbereich (601) angeordnet ist;
wobei der zweite Durchlässigkeitsteil (61), der eine Durchkontaktierung ist, die Farbfilmschicht umfasst, die in dem Lichtdurchlässigkeitsbereich ausgehöhlt angeordnet ist.

12. Flüssigkristallanzeigefeld (600) nach Anspruch 9 oder 10, wobei die zweite Filmgruppe (6) eine Schwarzmatrix (921) und eine flache Schicht (93) umfasst und die Schwarzmatrix (921) sich zwischen dem zweiten Substrat (7) und der flachen Schicht (93) befindet; der zweite Anzeigeteil (63) einen Teil der Schwarzmatrix (921) und einen Teil der flachen Schicht (93) umfasst, die in dem Anzeigebereich (603) angeordnet sind; und der zweite Übergangsteil (62) einen Teil der Schwarzmatrix (921) und einen Teil der flachen Schicht (93) umfasst, die in dem Lichtabschirmungsbereich (602) angeordnet sind; der zweite Lichtdurchlässigkeitsteil (61) einen Teil umfasst, der von der flachen Schicht (93) ist und der in dem Lichtabschirmungsbereich (601) angeordnet ist; und die Oberfläche, die von der flachen Schicht (93) ist und die von dem zweiten Substrat (7) entfernt ist, eine flache Oberfläche ist.

13. Flüssigkristallanzeigefeld (600) nach einem der Ansprüche 1 bis 12, wobei das Flüssigkristallanzeigefeld ferner eine Trägerbaugruppe (41) umfasst und die Trägerbaugruppe (41) sich zwischen der ersten Filmgruppe (2) und der zweiten Filmgruppe (6) befindet und die Flüssigkristallschicht (4) in einer Richtung von dem ersten Substrat (1) zu dem zweiten Substrat (7) durchdringt, um einen Abstand zwischen dem ersten Substrat (1) und dem zweiten Substrat (7) aufrechtzuerhalten.

14. Flüssigkristallanzeigefeld (600) nach Anspruch 13, wobei die Trägerbaugruppe (41) eine Mehrzahl von ersten Trägersäulen (411) umfasst und die Mehrzahl von ersten Trägersäulen (411) von dem Lichtdurchlässigkeitsbereich (601) entfernt angeordnet sind, wobei die Mehrzahl von ersten Trägersäulen (411) die Flüssigkristallschicht (4) in der Richtung von dem ersten Substrat (1) zu dem zweiten Substrat (7) durchdringt.

15. Flüssigkristallanzeige, umfassend ein Hintergrundbeleuchtungsmodul und das Flüssigkristallanzeigefeld (600) nach einem der Ansprüche 1 bis 14, wobei das Hintergrundbeleuchtungsmodul dazu ausgelegt ist, eine Hintergrundbeleuchtungsquelle für das Flüssigkristallanzeigefeld bereitzustellen, und das Hintergrundbeleuchtungsmodul einen Lichtdurchlässigkeitsteil umfasst, der dem Lichtdurchlässigkeitsbereich direkt gegenüberliegt.

## Revendications

1. Écran d'affichage à cristaux liquides (600), dans lequel l'écran d'affichage à cristaux liquides (600) comprend une région de transmission de lumière (601), une région de blocage de lumière (602) entourant la région de transmission de lumière (601), et une région d'affichage (603) entourant la région de blocage de lumière (602) ; et
l'écran d'affichage à cristaux liquides (600) comprend un premier substrat (1), un premier groupe film (2), une première couche d'alignement (3), une couche de cristaux liquides (4), une seconde couche d'alignement (5), un second groupe film (6), et un second substrat (7) qui sont successivement disposés de manière stratifiée ;
le premier substrat (1) et le second substrat (7) sont tous les deux faits d'un matériau transparent, et couvrent de façon continue la région de transmission de lumière (601), la région de blocage de lumière (602), et la région d'affichage (603) ;
la première couche d'alignement (3), la couche de cristaux liquides (4), et la seconde couche d'alignement (5) sont toutes situées dans la région de transmission de lumière (601), la région de blocage de lumière (602), et la région d'affichage (603) ;
le premier groupe film (2) comprend une première partie d'affichage (23) située dans la région d'affichage (603), une première partie de transition (22) située dans la région de blocage de lumière (602), et une première partie de transmission de lumière (21) située dans la région de transmission de lumière (601) ; le second groupe film (6) comprend une seconde partie d'affichage (63) située dans la région d'affichage (603), une seconde partie de transition (62) située dans la région de blocage de lumière (602), et une seconde partie de transmission de lumière (61) située dans la région de transmission de lumière (601) ; la première partie d'affichage (23) et la seconde partie d'affichage (63) coopèrent l'une avec l'autre pour afficher une image ; la première partie de transmission de lumière (21) et la seconde partie de transmission de lumière (61) permettent toutes les deux à de la lumière visible de passer ; au moins une de la première partie de transition (22) et de la seconde partie de transition (62) peut bloquer la lumière visible ; et
dans une direction depuis le premier substrat (1) jusqu'au second substrat (7), une épaisseur de la première partie d'affichage (23) est supérieure à celle de la première partie de transmission de lumière (21), la première partie de transition (22) forme une structure de grade qui raccorde la première partie d'affichage (23) à la première partie de transmission de lumière (21), et une surface supérieure (221) qui est de la première partie de transition (22) et qui est éloignée du premier substrat (1) comprend une ou plusieurs surfaces gradées (222), dans lequel
la surface supérieure (221) de la première partie de transition (22) comprend en outre une pluralité de surfaces de jonction (223) qui sont espacées les unes des autres, la surface gradée (222) est raccordée entre deux surfaces de jonction adjacentes (223), et un angle inclus de 120° à 135° est formé entre la surface gradée (222) et la surface de jonction (223) qui sont raccordées, dans lequel la structure de grade est configurée pour permettre une transition progressive d'une différence de hauteur entre la première partie d'affichage (23) et la première partie de transmission de lumière (21).

2. Écran d'affichage à cristaux liquides (600) selon la revendication 1, dans lequel la surface supérieure (221) de la première partie de transition (22) comprend en outre une surface de transition (224), la surface de transition (224) est raccordée entre la surface de jonction (223) et une surface supérieure (211) qui est de la première partie de transmission de lumière (21) et qui est éloignée du premier substrat (1), et la surface de transition (224) est au même niveau que la surface supérieure (211) de la première partie de transmission de lumière (21),
dans lequel la surface de jonction est une surface de jonction la plus proche de la première partie de transmission de lumière parmi la pluralité de surfaces de jonction.

3. Écran d'affichage à cristaux liquides (600) selon l'une quelconque des revendications 1 et 2, dans lequel le premier groupe film (2) comprend une couche de réseau de dispositif (91), et la couche de réseau de dispositif (91) comprend une pluralité de couches de film de transmission de lumière (901) et une pluralité de couches de film de blocage de lumière (902) qui sont disposées de manière stratifiée ; la première partie d'affichage (23) comprend des parties qui sont de la pluralité de couches de film de blocage de lumière (902) et qui sont situées dans la région d'affichage (603), et des parties qui sont de la pluralité de couches de film de transmission de lumière (901) et qui sont situées dans la région d'affichage (603) ; la couche de réseau de dispositif (91) forme une pluralité de transistors à film mince dans la région d'affichage (603) ; et la première partie de transmission de lumière (21) comprend une partie qui est d'une ou de plusieurs couches de film de transmission de lumière (901) et qui est située dans la région de transmission de lumière (601),
dans lequel les parties qui sont de la pluralité de couches de film de blocage de lumière (902) et qui sont incluses dans la première partie d'affichage, et les parties qui sont de la pluralité de couches de film de transmission de lumière (901) et qui sont incluses dans la première partie d'affichage forment conjointement la pluralité de transistors à film mince, et
dans lequel la pluralité de transistors à film mince sont disposés en un réseau.

4. Écran d'affichage à cristaux liquides (600) selon la revendication 3, dans lequel la première partie de transition (22) comprend une partie qui est d'une ou de plusieurs couches de film de transmission de lumière (901) et qui est dans la région de blocage de lumière (602) ; ou
la première partie de transition (22) comprend une partie qui est d'une ou de plusieurs couches de film de transmission de lumière (901) et qui est dans la région de blocage de lumière (602), et une partie qui est d'une ou de plusieurs couches de film de blocage de lumière (902) et qui est dans la région de blocage de lumière (602).

5. Écran d'affichage à cristaux liquides (600) selon la revendication 3 ou 4, dans lequel le second groupe film (6) comprend une couche de film couleur et une couche plate (93) ; la couche de film couleur est située entre le second substrat (7) et la couche plate (93), et la couche de film couleur comprend une matrice noire (921) et une pluralité de pare-couleurs (922) disposés de façon alternée avec la matrice noire (921) ; la seconde partie d'affichage (63) comprend la pluralité de pare-couleurs (922), une partie de la matrice noire (921), et une partie de la couche plate (93) qui sont agencées dans la région d'affichage (603) ; la seconde partie de transmission de lumière (61) est un trou d'interconnexion ; la seconde partie de transition (62) comprend une partie de la matrice noire (921) et une partie de la couche plate (93) qui sont agencées dans la région de blocage de lumière (602) ; et
dans la seconde partie de transition (62), une surface gradée (222) est formée à une extrémité qui est de la matrice noire (921) et qui est proche de la seconde partie de transmission de lumière (61), de telle sorte que la seconde partie de transition (62) forme une structure de grade, dans lequel la seconde partie de transmission (61) qui est un trou d'interconnexion comprend la couche de film couleur qui est disposée dans la région de transmission de lumière de manière évidée.

6. Écran d'affichage à cristaux liquides (600) selon la revendication 3 ou 4, dans lequel le second groupe film (6) comprend une couche de film couleur et une couche plate (93) ; la couche de film couleur est située entre le second substrat (7) et la couche plate (93), et la couche de film couleur comprend une matrice noire (921) et une pluralité de pare-couleurs (922) disposés de façon alternée avec la matrice noire (921) ; la seconde partie d'affichage (63) comprend la pluralité de pare-couleurs (922), une partie de la matrice noire (921), et une partie de la couche plate (93) qui sont agencées dans la région d'affichage (603) ; la seconde partie de transition (62) comprend une partie de la matrice noire (921) et une partie de la couche plate (93) qui sont agencées dans la région de blocage de lumière (602) ; et la seconde partie de transmission de lumière (61) comprend une partie qui est de la couche plate (93) et qui est agencée dans la région de transmission de lumière (601).

7. Écran d'affichage à cristaux liquides (600) selon la revendication 6, dans lequel la surface qui est de la couche plate (93) et qui est éloignée du second substrat (7) est une surface plate.

8. Écran d'affichage à cristaux liquides (600) selon la revendication 3 ou 4, dans lequel le second groupe film (6) comprend une couche de film couleur ; la couche de film couleur comprend une matrice noire (921) et une pluralité de pare-couleurs (922) disposés de façon alternée avec la matrice noire (921) ; la seconde partie d'affichage (63) comprend la pluralité de pare-couleurs (922) et une partie de la matrice noire (921) qui sont agencés dans la région d'affichage (603) ; la seconde partie de transition (62) comprend une partie qui est de la matrice noire (921) et qui est agencée dans la région de blocage de lumière (602) ; et la seconde partie de transmission de lumière (61) est un trou d'interconnexion,
dans lequel la seconde partie de transmission (61) qui est un trou d'interconnexion comprend la couche de film couleur qui est disposée dans la région de transmission de lumière de manière évidée.

9. Écran d'affichage à cristaux liquides (600) selon l'une quelconque des revendications 1 et 2, dans lequel le premier groupe film (2) comprend une couche de film couleur et une couche de réseau de dispositif (91), la couche de réseau de dispositif (91) est située entre la couche de film couleur et le premier substrat (1), la couche de film couleur comprend une pluralité de pare-couleurs (922), et la couche de réseau de dispositif (91) comprend une pluralité de couches de film de transmission de lumière (901) et une pluralité de couches de film de blocage de lumière (902) qui sont disposées de manière stratifiée ; la première partie d'affichage (23) comprend la pluralité de pare-couleurs (922), des parties qui sont de la pluralité de couches de film de blocage de lumière (902) et qui sont situées dans la région d'affichage (603), et des parties qui sont de la pluralité de couches de film de transmission de lumière (901) et qui sont situées dans la région d'affichage (603) ; la couche de réseau de dispositif (91) forme une pluralité de transistors à film mince dans la région d'affichage (603) ; et la première partie de transmission de lumière (21) comprend une partie qui est d'une ou de plusieurs couches de film de transmission de lumière (901) et qui est située dans la région de transmission de lumière (601),
dans lequel les parties qui sont de la pluralité de couches de film de blocage de lumière (902) et qui sont incluses dans la première partie d'affichage, et les parties qui sont de la pluralité de couches de film de transmission de lumière (901) et qui sont incluses dans la première partie d'affichage forment conjointement la pluralité de transistors à film mince, et
dans lequel la pluralité de transistors à film mince sont disposés en un réseau.

10. Écran d'affichage à cristaux liquides (600) selon la revendication 9, dans lequel la première partie de transition (22) comprend une partie qui est d'une ou de plusieurs couches de film de transmission de lumière (901) et qui est dans la région de blocage de lumière (602) ; ou
la première partie de transition (22) comprend une partie qui est d'une ou de plusieurs couches de film de transmission de lumière (901) et qui est dans la région de blocage de lumière (602), et une partie qui est d'une ou de plusieurs couches de film de blocage de lumière (902) et qui est dans la région de blocage de lumière (602).

11. Écran d'affichage à cristaux liquides (600) selon la revendication 9 ou 10, dans lequel le second groupe film (6) comprend une matrice noire (921) et une couche plate (93), et la matrice noire (921) est située entre le second substrat (7) et la couche plate (93) ; la seconde partie d'affichage (63) comprend une partie de la matrice noire (921) et une partie de la couche plate (93) qui sont agencées dans la région d'affichage (603) ; la seconde partie de transition (62) comprend une partie de la matrice noire (921) et une partie de la couche plate (93) qui sont agencées dans la région de blocage de lumière (602) ; et
la seconde partie de transmission de lumière (61) est un trou d'interconnexion ; ou la seconde partie de transmission de lumière (61) comprend une partie qui est de la couche plate (93) et qui est agencée dans la région de transmission de lumière (601), dans lequel la seconde partie de transmission (61) qui est un trou d'interconnexion comprend la couche de film couleur qui est disposée dans la région de transmission de lumière de manière évidée.

12. Écran d'affichage à cristaux liquides (600) selon la revendication 9 ou 10, dans lequel le second groupe film (6) comprend une matrice noire (921) et une couche plate (93), et la matrice noire (921) est située entre le second substrat (7) et la couche plate (93) ; la seconde partie d'affichage (63) comprend une partie de la matrice noire (921) et une partie de la couche plate (93) qui sont agencées dans la région d'affichage (603) ; la seconde partie de transition (62) comprend une partie de la matrice noire (921) et une partie de la couche plate (93) qui sont agencées dans la région de blocage de lumière (602) ; la seconde partie de transmission de lumière (61) comprend une partie qui est de la couche plate (93) et qui est agencée dans la région de transmission de lumière (601) ; et la surface qui est de la couche plate (93) et qui est éloignée du second substrat (7) est une surface plate.

13. Écran d'affichage à cristaux liquides (600) selon l'une quelconque des revendications 1 à 12, dans lequel l'écran d'affichage à cristaux liquides comprend en outre un ensemble support (41), et l'ensemble support (41) est situé entre le premier groupe film (2) et le second groupe film (6), et pénètre dans la couche de cristaux liquides (4) dans une direction depuis le premier substrat (1) jusqu'au second substrat (7), pour maintenir un espacement entre le premier substrat (1) et le second substrat (7).

14. Écran d'affichage à cristaux liquides (600) selon la revendication 13, dans lequel l'ensemble support (41) comprend une pluralité de premières colonnes de support (411), et la pluralité de premières colonnes de support (411) sont agencées de façon éloignée de la région de transmission de lumière (601), dans lequel ladite pluralité de premières colonnes de support (411) pénètrent dans la couche de cristaux liquides (4) dans ladite direction depuis le premier substrat (1) jusqu'au second substrat (7).

15. Affichage à cristaux liquides, comprenant un module de rétro-éclairage et l'écran d'affichage à cristaux liquides (600) selon l'une quelconque des revendications 1 à 14, dans lequel le module de rétro-éclairage est configuré pour fournir une source de rétro-éclairage pour l'écran d'affichage à cristaux liquides, et le module de rétro-éclairage a une partie de transmission de lumière qui fait directement face à la région de transmission de lumière.
